# FASCICULE DE BREVET EUROPEEN

(11) **EP 1 438 175 B1**
(45) Date de publication et mention de la délivrance du brevet: **07.03.2007**
(21) Numéro de dépôt: 02795342.1
(22) Date de dépôt: 25.10.2002
(51) Int. Cl.: B29C 47/00, C08L 29/04

(54) **PROCEDE DE PRODUCTION D UNE COMPOSITION THERMOPLASTIQUE A BA SE D ALCOOL POLYVINYLIQUE EXEMPTE D INFONDUS ET DE DEGR ADATION**
VERFAHREN ZUR HERSTELLUNG VON POLYVINYLALKOHOL ENTHALTENDER THERMOPLASTISCHER ZUSAMMENSETZUNG OHNE DEGRADATION UND NICHT GESCHMOLZENES MATERIAL
METHOD FOR PRODUCING A THERMOPLASTIC COMPOSITION BASED ON POLYVINYL ALCOHOL FREE OF UNFUSED MATERIAL AND DEGRADATION

(30) Priorité: 25.10.2001 FR 0113776
(43) Date de publication de la demande: 21.07.2004
(73) Titulaire: Multibase S.A.S., 38380 Saint Laurent du Pont (FR)
(72) Inventeur: BERRUYER, Yannick, F-38960 Saint Aupre (FR)
(74) Mandataire: Gaucherand, Michel
(86) Numéro de dépôt international: PCT/FR2002/003670
(87) Numéro de publication internationale: WO 2003/035363

(56) Documents cités:
- EP-A- 0 537 683
- US-A- 3 607 812
- US-A- 5 137 969
- US-A- 6 080 346

## Description

### Domaine de l'invention

L'invention concerne un procédé de production d'une composition thermoplastique à base d'alcool polyvinylique qui soit homogène et exempte de dégradation se manifestant par une coloration jaunâtre.

L'invention concerne plus particulièrement un procédé de production par extrusion d'une composition thermoplastique à base d'alcool polyvinylique contenant au moins un agent plastifiant, la composition obtenue étant homogène, c'est-à-dire exempte de cristaux d'alcool polyvinylique infondus et ne subissant aucune dégradation lors de l'extrusion, une telle dégradation se manifestant par l'apparition d'une coloration jaunâtre.

L'invention concerne très particulièrement un procédé de production par extrusion d'une composition thermoplastique se présentant sous la forme de gels ou de granulés, ces produits d'extrusion étant exempts d'infondus et de dégradation qui se manifesterait par une coloration jaunâtre desdits produits d'extrusion.

L'invention concerne enfin un procédé de production par extrusion d'une composition thermoplastique d'alcool polyvinylique sous forme de gels ou de granulés, exempte d'infondus et de coloration jaunâtre, les produits d'extrusion étant destinés à être, par la suite, utilisés comme matière première dans la réalisation de produits finis ou articles par l'un ou l'autre des procédés de transformation connus tels que par exemple extrusion, extrusion-soufflage, injection, moulage, calandrage, slush-moulding ou autres, les articles finis étant exempts de défauts tels que des infondus et/ou démunis de coloration jaunâtre, signe habituel d'une dégradation plus ou moins prononcée de la matière polymère constitutive.

### Etat de la technique

L'alcool polyvinylique résulte de l'hydrolyse de l'acétate de polyvinyle en solution alcoolique en présence d'un catalyseur d'hydrolyse acide ou basique. L'alcool polyvinylique ainsi obtenu se présente sous la forme de cristaux blancs dont le taux d'hydrolyse mesuré par le nombre de groupes acétate remplacé par le groupe hydroxyle -OH peut varier d'environ 100 % en moles à 60 % en moles.

Les propriétés et caractéristiques diverses des alcools polyvinyliques résultant de la réaction catalytique d'hydrolyse dépendent non seulement du taux d'hydrolyse mais aussi de leur degré de polymérisation qui est lui-même dépendant du degré de polymérisation de l'acétate de polyvinyle.

Les alcools polyvinyliques offrent des propriétés remarquables et intéressantes que sont leur biodégradabilité, leur qualité relative de transparence, leur caractère hydrosoluble, leur activité « barrière » aux gaz, aux radiations ultraviolettes, leur bonne tenue aux hydrocarbures, aux huiles et à d'autres matières encore. De telles qualités rendent les alcools polyvinyliques très attractifs dans des domaines d'utilisation très divers.

De nombreuses applications sont connues pour les alcools polyvinyliques. Par exemple, un domaine d'application particulier concerne l'emballage à travers les films, le flaconnage et autres conteneurs, tous ces objets étant réalisés par les méthodes développées par la plasturgie. Toutefois, l'utilisation des alcools polyvinyliques se heurte encore actuellement à deux difficultés majeures que sont la présence de cristaux d'alcool polyvinylique infondus dans la masse fondue des polymères lors de la réalisation d'articles au moyen de ces polymères et une tendance marquée à une évolution de leur coloration sous l'effet des conditions thermiques et mécaniques qui leur sont appliquées pour les placer dans un état fondu propre à leur utilisation, cette coloration passant d'un état d'origine opalescent à un autre état plus ou moins jaunâtre après extrusion.

En fait, il est patent que les deux difficultés ainsi évoquées sont en étroite dépendance l'une de l'autre, car la température de fusion des alcools polyvinyliques est très proche de leur température de décomposition, à l'origine de l'évolution de leur coloration par dégradation thermique : cette faible différence entre les températures de fusion et de décomposition rend particulièrement difficile l'exploitation industrielle de ces polymères.

Il est vrai que, en pratique, lors de la fusion des cristaux d'alcool polyvinylique, par exemple au cours d'une extrusion, la température de la matière polymère fondue peut atteindre un niveau thermique de l'ordre de 230 °C qui peut être dépassé et atteindre 250 °C, niveau thermique qui paraît nécessaire pour fondre les derniers cristaux au coeur de la matière et pour que cette matière fondue soit homogène, c'est-à-dire exempte d'infondus. Or la matière polymère fondue peut-être le siège - au cours de cette fusion/extrusion malaxante - de chocs thermiques ponctuels importants pouvant dépasser le seuil de la température maximale précédemment évoquée, par le fait que ladite matière polymère est également soumise à des effets locaux d'échauffement résultant des efforts mécaniques de cisaillement qu'elle subit lors du malaxage et de l'extrusion.

Dès lors, l'alcool polyvinylique ponctuellement surchauffé subit une décomposition de ses chaînes dont les manifestations apparentes sont une libération des groupes hydroxyles, la scission de ses molécules, la production de sous produits de décomposition, l'apparition d'une coloration jaunâtre de la matière, une évolution de ses caractéristiques physico-chimiques et une chute des propriétés mécaniques des articles réalisés à partir d'alcools polyvinyliques ainsi mis en oeuvre.

C'est pourquoi, il apparaît évident que l'élimination des « infondus » par élévation de la température pour l'obtention d'alcool polyvinylique homogène à l'état fondu ne peut pas se faire par ce moyen car il conduit à une dégradation de ses chaînes, et dès lors, à une variation de ses caractéristiques physico-chimiques, en particulier mécaniques et à l'apparition d'une coloration jaunâtre significative qui rend cette matière polymère inutilisable pour la réalisation d'articles.

Ainsi s'impose l'exigence de la recherche d'un compromis entre un minimum de cristaux infondus dans la masse de polymères fondus et la plus faible évolution possible de la couleur vers le jaune provoqué par la dégradation thermique de la matière, ce compromis étant à rechercher au niveau de la température à pratiquer lors de la fusion et de l'extrusion de l'alcool polyvinylique.

De nombreuses publications attestent de la recherche de ce compromis à travers l'importance des travaux conduits pour résoudre simultanément les deux difficultés précédemment évoquées et rencontrées lors de l'exploitation des alcools polyvinyliques que sont :
- la présence de cristaux infondus dans la masse de polymères d'alcool polyvinylique après leur fusion-malaxage,
- l'effet des chocs thermiques imposés aux polymères d'alcools polyvinyliques au cours de l'opération de fusion-malaxage conduisant à une matière extrudée de couleur jaunâtre manifestant une amorce de dégradation des chaînes moléculaires.

Plusieurs voies ont été explorées, portant sur la recherche de compositions susceptibles de résister à des chocs thermiques et/ou portant sur des procédés de mises en oeuvre de ces compositions.

Selon une première voie de recherche, pour favoriser la fusion complète des cristaux d'alcool polyvinylique et obtenir par fusion-malaxage une masse polymère fondue exempte d'infondus, des compositions à base d'alcool polyvinylique et leur mode de préparation ont été particulièrement travaillés, de même que les procédés d'extrusion de ces compositions.

Il a, par exemple, été proposé :
- Dans le brevet US 3,997,489, une composition améliorée à base d'alcool polyvinylique consistant en un mélange comprenant de l'alcool polyvinylique, éventuellement un agent plastifiant qui est, par exemple, un alcool polyhydrique et comprenant également pour favoriser la fusion des cristaux de polymères, une cire de bas poids moléculaire, cette cire étant par exemple un acide gras, et un homo ou copolymère à base d'éthylène de poids moléculaire plus élevé. Cette composition améliorée est préparée par mélange des divers constituants puis extrudée à une température comprise entre 240 °C et 250 °C. Mais ce niveau de température parait trop élevée pour ne pas être à l'origine d'un risque de dégradation de la composition : la présence d'une cire et d'un polymère d'éthylène, et éventuellement d'un plastifiant, ne peut pas créer une protection assez efficace de la composition contre les chocs thermiques.
- Dans le brevet US 4,119,604 une autre composition améliorée destinée à la réalisation de films à base d'alcool polyvinylique consistant en : (i) un mélange comprenant un alcool polyvinylique de bas poids moléculaire et un alcool polyvinylique de poids moléculaire moyen, et éventuellement un copolymère d'alcool vinylique, et comprenant un ester éthylénique insaturé, et (ii) un plastifiant qui est un polyethylèneglycol. Cette composition est préparée par mélange à sec de divers constituants solides, le plastifiant étant introduit sous forme d'une solution aqueuse par pulvérisation dans le mélange pulvérulent (i), puis ce mélange est extrudé à l'état fondu à une température se situant entre 180 °C et 250 °C. Mais ce niveau de température est également trop élevé pour que la composition ne subisse pas une amorce de dégradation et la présence d'un plastifiant et d'eau de pulvérisation dans la composition ne constitue pas dans ce cas un facteur diminuant le risque de dégradation thermique.
- Dans le brevet US 4,469,837 une composition améliorée à base d'alcool polyvinylique pour la production d'articles tels que des films. Cette composition consiste en un mélange sec d'alcool polyvinylique qui contient originellement de l'humidité absorbée avec un ou plusieurs monomères d'alcools polyhydroxydes à l'état solide qui disposent d'un point de fusion compris entre 160 °C et 230 °C. Ce mélange est fondu et extrudé à des températures comprises entre 180 °C et 240 °C selon le taux d'hydrolyse et la viscosité de l'alcool polyvinylique mis en oeuvre et selon le pourcentage d'alcools polyhydroxydes introduits dans le mélange. Mais cette composition en particulier n'élimine pas le phénomène de coloration jaunâtre qui résulte d'une dégradation thermique des polymères.

Ainsi, bien que toutes les compositions précédemment évoquées aient été particulièrement étudiées pour favoriser la fusion des cristaux d'alcool polyvinylique et éliminer les infondus, les conditions de températures élevées pratiquées lors de leur extrusion provoquent une amorce de décomposition des chaînes macromoléculaires de ces polymères qui se manifeste par une évolution de leurs caractéristiques physico-chimiques et potentiellement par une diminution de leurs propriétés mécaniques et l'apparition d'une coloration marquée en jaune, qui est la manifestation la plus immédiatement apparente de la dégradation thermique. C'est pourquoi il paraît difficile de travailler par extrusion une composition à base d'alcool polyvinylique à des températures aussi élevées pour éliminer les cristaux d'alcool polyvinylique infondus.

Dès lors, pour un développement industriel de ces polymères, d'autres voies techniques ont été explorées, essayant de maîtriser les effets perturbant constatés et d'apporter des améliorations aux compositions à base d'alcools polyvinyliques, aux modes de préparation des mélanges à extruder et aux conditions d'extrusion de ces compositions formées des mélanges ainsi préparés.

L'exploration de ces autres voies techniques vise à l'élimination des effets néfastes constatés, c'est à dire vise à obtenir la fusion complète des compositions à base d'alcools polyvinyliques lors d'opérations de malaxage, fusion, extrusion auxquelles lesdites compositions sont assujetties, sans qu'il y ait de manifestations de dégradations desdites compositions.

Ces autres voies techniques visent en conséquence l'homogénéité des compositions extrudées à base d'alcool polyvinylique et plus clairement dit, visent la fusion complète de ces compositions polymères de telle sorte qu'elles soient exemptes d'infondus dans leur masse sans toutefois subir des dommages par dégradation thermique se manifestant par un effet de coloration jaunâtre plus ou moins prononcé.

Pour obtenir cette fusion complète des cristaux d'alcools polyvinyliques, d'autres moyens que ceux précédemment évoqués ont été explorés dont quelques cas sont cités à titre illustratif.
- Le brevet US 4,206,101 décrit une composition à base d'alcool polyvinylique, comprenant aussi un agent plastifiant qui est du polyéthylène glycol ayant un poids moléculaire compris entre 325 et 550. Diverses méthodes sont décrites pour la préparation et la mise en oeuvre de cette composition. Par exemple, l'une des méthodes consiste à pulvériser l'agent plastifiant tel quel ou en solution aqueuse sur l'alcool polyvinylique et à extruder fondue ladite composition telle que préparée. Une autre méthode consiste à introduire en tête d'une extrudeuse un mélange pulvérulent composé d'alcool polyvinylique et d'un agent glissant, par la trémie d'alimentation de l'extrudeuse, puis, alors que la fusion de ce mélange est réalisée, à injecter l'agent plastifiant dans la première section de l'extrudeuse au sein du mélange fondu formé desdits alcools polyvinyliques et agent glissant, enfin à extruder la composition résultant du mélange en extrudeuse à une température de l'ordre de 210 °C, température plus basse que celles précédemment évoquées.
- Le brevet US 5,137,969 décrit une autre composition à base d'alcool polyvinylique qui se compose d'un alcool polyvinylique, d'un plastifiant pour en améliorer les caractéristiques de coulabilité, ce plastifiant étant par exemple du polyéthylène glycol, d'un agent dispersant pour faciliter le mélange des composants et/ou d'un acide tel que l'acide phosphorique susceptible d'agir sur la stabilité thermique de l'alcool polyvinylique. Selon la description qui en est faite, la composition peut être préparée dans une chambre de pré-mélange par introduction de l'alcool polyvinylique et de l'agent dispersant, le plastifiant et l'acide phosphorique étant introduits en mélange sous la forme d'une pulvérisation. Dans ce cas, la température de la composition en préparation dans la chambre de mélange est tenue à un niveau inférieur à 105 °C et préférentiellement d'au plus 95 °C.

L'extrusion de la composition ainsi préparée se fait alors en extrudeuse à une température adéquate, plus faible que celles pratiquées dans les procédés précités, comprise entre 150 °C et 230 °C selon les zones considérées de l'extrudeuse, pour éviter ou limiter les phénomènes de dégradation de l'alcool polyvinylique.
Toutefois, selon une variante, pendant que l'alcool polyvinylique est introduit en tête de l'extrudeuse par la trémie d'alimentation, le mélange liquide constitué par le plastifiant (glycérol), l'acide d'origine minérale (H₃ PO₄) et l'agent dispersant (mono oléate de glycérol) est injecté dans l'extrudeuse à une distance d'environ 3 diamètres en aval de la zone d'introduction de l'alcool polyvinylique. De cette manière, les trois additifs ci-dessus évoqués sont introduits dans l'alcool polyvinylique, puis le mélange ainsi obtenu est très rapidement soumis à fusion, cisaillé et extrudé à une température comprise entre 150 °C et 230 °C évitant un contact plus prolongé à une température élevée dans une chambre de pré-mélange.

Mais que soit pratiquée la préparation de la composition :
- dans une chambre de pré-mélange, suivie de l'introduction du mélange dans une extrudeuse et son extrusion,
- ou bien, selon la variante, dans une extrudeuse par mélange de l'alcool polyvinylique introduit en tête de l'extrudeuse, avec des adjuvants liquides injectés en mélange à une distance au plus de 3 diamètres de la zone d'alimentation en alcool polyvinylique,
la composition extrudée présente toujours au moins l'un des deux défauts majeurs précédemment évoqués que sont la présence de cristaux d'alcool polyvinylique infondus dans la masse et/ou une évolution de la couleur de ladite composition extrudée vers le jaune plus ou moins soutenu, évolution de coloration manifestant une amorce de dégradation non maîtrisée de l'alcool polyvinylique résultant d'une température d'extrusion encore trop élevée.
- Enfin, la demande de brevet internationale WO 97/22 658 propose une composition à base d'alcool polyvinylique ainsi qu'une méthode de préparation de la composition et sa mise en oeuvre en extrudeuse :
   - la composition proposée est formée d'alcool polyvinylique, d'un agent plastifiant à raison de 5 % à 25 % en poids par rapport à l'alcool polyvinylique et d'eau ajoutée en excès dans une quantité déterminée dans le but d'empêcher la décomposition thermique et donc l'apparition d'un jaunissement de l'alcool polyvinylique. Telle qu'exprimée dans la description de cette demande de brevet, la présence d'eau ajoutée en excès dans la composition à base d'alcool polyvinylique pourrait être susceptible d'empêcher la décomposition thermique de l'alcool polyvinylique dès lors que ladite composition atteint la température d'au moins 150 °C en intervenant sur l'équilibre de la réaction de décomposition par la présence de cet excès d'eau.
   - Le procédé mis en oeuvre pour la préparation de ladite composition et son extrusion, pour produire des granulés par exemple, consiste :
      a) dans une première étape, à mélanger les différents constituants de la composition dans une extrudeuse, c'est à dire l'alcool polyvinylique, les agents plastifiants et de l'eau en excès, en soumettant ces constituants à une énergie mécanique de cisaillement et une énergie calorifique en appliquant un profil de température progressif entre la zone d'alimentation à 140 °C et la zone de récupération de la composition homogénéisée à 230 °C, l'énergie totale fournie à la composition étant comprise entre 0,2 et 1,4 KwH/Kg et
      b) dans une deuxième étape, à éliminer l'eau présente, c'est à dire et en particulier l'eau ajoutée en excès de telle sorte que le taux d'humidité présent soit inférieur ou égal à 0,1 % (méthode Karl Fischer à 200 °C).

Toutefois, les granulés et/ou articles réalisés selon les méthodes de la plasturgie, en particulier par extrusion, ne sont pas totalement homogènes et se révèlent contenir encore un certain taux de cristaux d'alcool polyvinylique infondus, certes de tailles faibles. Mais ces granulés et/ou articles peuvent développer une certaine propension aléatoire à la dégradation de leur composition qui se manifeste par l'apparition d'une couleur jaunâtre dans la masse qui est difficilement maîtrisable d'un lot à l'autre d'alcool polyvinylique mis en oeuvre : les compositions à base d'alcool polyvinylique marquées par une amorce de dégradation deviennent alors inutilisables, non seulement en raison des pertes de leurs propriétés physico-chimiques et mécaniques, mais également en raison de l'évolution non maîtrisée de la couleur jaunâtre de lot de production à l'autre.

### Objets de l'invention

- Un premier objet de l'invention est de créer un procédé permettant de produire sous forme de gels ou de granulés thermoplastiques, des compositions à base d'alcool polyvinylique dont l'intégrité des caractéristiques physico-chimiques et mécaniques soit assurée.
- Un autre objet de l'invention est de créer un procédé permettant de produire des compositions thermoplastiques à base d'alcools polyvinyliques sous forme de gels ou de granulés sur lesquels les effets thermiques sont maîtrisés et leurs niveaux de températures les plus élevés maintenus à des seuils inférieurs à ceux antérieurement pratiqués.
- Un autre objet de l'invention est de créer un procédé permettant de produire des compositions thermoplastiques à base d'alcools polyvinyliques contenant également au moins un plastifiant compatible avec lesdits polymères pour en améliorer la coulabilité et diminuer fortement les phénomènes de cisaillement mécanique par une mise en oeuvre mécanique et thermique particulière.
- Un autre objet de l'invention est de créer un procédé absolument reproductible, c'est à dire non aléatoire dans le temps, permettant de produire des gels ou des granulés thermoplastiques à base d'alcool polyvinylique, tout en étant exempt des défauts d'infondus et de coloration en jaune.
- Un autre objet de l'invention est de créer un procédé permettant de produire des gels ou des granulés thermoplastiques à base d'alcool polyvinylique qui puissent être transformés en articles finis par l'un ou l'autre des procédés de la plasturgie, en particulier dans le domaine de l'emballage, sans que se manifestent des défauts d'infondus et/ou d'apparition de coloration au cours de la transformation des granulés.

### Sommaire de l'invention

Les divers objets précédemment énoncés assignés à l'invention peuvent être atteints grâce au procédé de production d'une composition thermoplastique à base d'alcool polyvinylique qui élimine les inconvénients remarqués lors de l'examen de l'état de la technique et apporte, de plus, de substantielles améliorations aux moyens antérieurement décrits, qui permet d'obtenir une composition thermoplastique qui, après extrusion, est exempte d'infondus et de tout phénomène de dégradation physico-chimique se manifestant habituellement par un jaunissement de l'article réalisé.

Selon l'invention, comme décrite dans la revendication 1, le procédé de production par malaxage - fusion - extrusion d'une composition thermoplastique à base d'au moins un alcool polyvinylique exempte d'infondus et de dégradation physico-chimique dudit alcool polyvinylique se manifestant par un jaunissement, composition comprenant également au moins un agent plastifiant dudit alcool polyvinylique et éventuellement d'autres agents, procédé qui comporte des zones d'actions consistant en :
- l'introduction de(s) l'alcool(s) polyvinylique(s) cristallin(s) et de(s) l'agent(s) plastifiant(s), en une zone d'alimentation pour y être mélangés sous agitation, le mélange étant porté à une température inférieure à la température de fusion dudit mélange,
- la fusion sous une température appropriée dans une zone de fusion du mélange chaud provenant de la zone d'alimentation et de mélange sous agitation,
- le dégazage du mélange fondu provenant de la zone de fusion dans une zone de dégazage pour en éliminer tous les composés volatiles résultant de la fusion du mélange,
- la compression dans une zone de compression du mélange fondu dégazé et son extrusion à une température appropriée,
se caractérise en ce que, entre la zone d'introduction et de mélange des composants et la zone de fusion du mélange des composants, on crée une zone d'absorption totale de l'agent plastifiant par les cristaux d'alcool polyvinylique jusqu'au coeur desdits cristaux, l'absorption se faisant sous une action de malaxage à faible taux de cisaillement et sous une température faible et contrôlée telle que la fusion des cristaux d'alcool polyvinylique ayant absorbé à coeur l'agent plastifiant ne se produise pas.

La détermination de la conservation de la couleur opalescente de la composition après extrusion peut se faire par les méthodes de colorimétrie connues de l'homme de l'art. Cette détermination peut en particulier se faire à partir de films-éprouvettes destinés à être soumis à expertise par colorimétrie par la mesure en valeur absolue du paramètre b* dans le système du classement des couleurs selon la technique CIELAB et l'échelle qui en découle, comportant les paramètres a*, b* et 1*, selon laquelle le paramètre b* doit être inférieur à 10 pour exprimer la blancheur de la composition.

### Description détaillée de l'invention

S'il est bien connu, comme l'état de la technique le confirme, que dans une composition à base d'alcool polyvinylique, la présence d'un agent plastifiant a pour raison d'être de rechercher un abaissement de la température de fusion du mélange par rapport à la température de fusion de l'alcool polyvinylique seul :
- pour limiter l'importance de chocs thermiques à l'origine de la dégradation dudit alcool polyvinylique et essayer de maîtriser et gérer l'apparition du jaunissement,
- pour diminuer voire éliminer la présence des cristaux d'alcool polyvinylique infondus dans le mélange extrudé,
il apparaît au vu de l'état de la technique que les conditions du mode de réalisation du mélange sont déterminantes pour l'obtention d'une composition à base d'alcool polyvinylique à la fois homogène, c'est à dire exempte d'infondus, et non dégradée thermiquement, c'est à dire dont les propriétés initiales physico-chimiques sont protégées et conservées au cours de la formation par extrusion des produits d'extrusion ou au cours de la réalisation d'articles finis par utilisation desdits produits d'extrusion.

Il est vrai, dans l'état de la technique, que l'agent plastifiant est mis en oeuvre dans les compositions à base d'alcool polyvinylique pour en abaisser le point de fusion et, dès lors, le différencier fortement de sa température de décomposition généralement très proche du point de fusion et de soustraire ainsi l'alcool polyvinylique à une dégradation certaine par choc thermique.

Mais il est vrai également, dans ce même état de la technique, que les améliorations recherchées qui concernent à la fois l'élimination des infondus et/ou l'absence de coloration après extrusion de la composition, ne sont pas pleinement atteintes à travers les moyens décrits dans l'état de la technique et que, dès lors, il faut en rechercher les causes pour éliminer ces défauts principaux.

Or, conformément à cet état de la technique, les compositions à base d'alcool polyvinylique contenant également au moins un autre composant qui est un plastifiant dudit polymère, sont préparées généralement sous fort cisaillement et sous un profil de températures trop élevées, par mélange des divers composants préalablement à la fusion ou simultanément à la fusion de l'alcool polyvinylique :
- en pré-mélangeur dynamique indépendant des moyens de fusion et d'extrusion, la fusion et l'extrusion dudit mélange obtenu s'effectuant immédiatement après sa formation,
- ou directement en extrudeuse, là où s'effectue en continu et successivement le mélange des composants, le polymère pouvant être à l'état fondu, suivi de son extrusion.

Dans le cas où, selon l'état de la technique, cette préparation du mélange se fait dans un pré-mélangeur dynamique indépendant des moyens de fusion et d'extrusion, le plastifiant peut être introduit dans les cristaux d'alcool polyvinylique sous une forme diluée dans un milieu liquide approprié, ou non diluée, par un moyen tel que par exemple en introduction simultanée avec les cristaux, ou par une pulvérisation sur lesdits cristaux, le mélange obtenu étant soumis à une action mécanique de brassage à caractère cisaillant et à un chauffage portant le mélange à des températures souvent trop élevées, c'est à dire atteignant des niveaux provoquant au moins une amorce de fusion du mélange formé par les cristaux d'alcool polyvinylique et du plastifiant.

Dans le cas où, selon l'état de la technique, cette préparation du mélange s'effectue directement dans une extrudeuse l'introduction des composants peut se faire :
- simultanément par la trémie d'alimentation, le mélange s'effectuant dans la première zone suivi d'une fusion rapide à haute température dans la zone suivante,
- ou séparément, et dans ce dernier cas, les cristaux d'alcool polyvinylique étant introduits dans l'extrudeuse par la trémie d'alimentation et le plastifiant étant introduit dans l'extrudeuse par injection directe au sein de l'alcool polyvinylique en cours de malaxage qui est placé dans un état proche de la fusion ou totalement fondu. Puis la fusion complète du mélange est conduite et achevée rapidement sous malaxage cisaillant après l'injection du plastifiant dans le polymère. L'injection du plastifiant s'effectue, par exemple, à une distance d'au plus 3 D (D étant le diamètre de la vis) de l'extrémité amont de l'extrudeuse.

Or, selon l'invention, et à l'opposé de ce qui est mentionné dans l'état de la technique, il est apparu possible de parvenir à des compositions à base d'alcool polyvinylique très homogènes et non dégradées, extrudées par mise en oeuvre de moyens classiques de fusionextrusion, la fusion de la composition pouvant se faire dans un intervalle de températures pouvant se situer entre une valeur un peu inférieure et une valeur un peu supérieure à la température de fusion de l'alcool polyvinylique seul, et, pour autant, sans qu'il y ait dégradation par décomposition, à condition que :
- les cristaux d'alcool polyvinylique absorbent totalement, et ce, à coeur, au moins un agent plastifiant desdits polymères,
- cette absorption se fasse sous une température faible et contrôlée telle qu'il n'y ait pas amorce de fusion des cristaux d'alcool polyvinylique ayant absorbé à coeur l'agent plastifiant.

La température du mélange d'alcool polyvinylique et du plastifiant, pour que se produise une absorption à coeur du plastifiant par les cristaux d'alcool polyvinylique, doit être inférieure d'au moins 10 °C à la température de fusion des cristaux d'alcool polyvinylique ayant absorbé à coeur l'agent plastifiant appelé par la suite alcool polyvinylique plastifié.

Pour ce faire, la zone d'absorption selon l'invention créée entre la zone d'alimentation en alcool polyvinylique et en plastifiant dudit polymère d'une part, zone où ils sont mélangés, et la zone de fusion du mélange d'autre part, constitue une zone de travail dans laquelle s'effectue l'absorption complète de l'agent plastifiant jusqu'à coeur des cristaux d'alcool polyvinylique.

Cette zone d'absorption est :
- munie de moyens mécaniques qui favorisent le mélange intime des composants et le transfert du mélange, mais qui ne développent aucun phénomène de cisaillement à l'origine de chocs thermiques importants et à l'origine de la dégradation de l'alcool polyvinylique,
- pourvue de moyens de chauffage et de régulation thermique de telle sorte qu'il n'y ait pas fusion ou amorce de fusion des cristaux d'alcool polyvinylique plastifiés, la température étant inférieure d'au moins 10 °C et préférentiellement d'au moins 20 °C à la température de fusion desdits cristaux d'alcool polyvinylique plastifiés, et telle que le temps de séjour du mélange y soit suffisant pour que les cristaux d'alcool polyvinylique soient bien imprégnés à coeur par le plastifiant, que ledit plastifiant soit complètement absorbé par la masse d'alcool polyvinylique, et ce, jusqu'à coeur des cristaux, et que le mélange obtenu constitue une masse absolument homogène.

Conformément à l'invention, dans la zone d'absorption totale de l'agent plastifiant par les cristaux d'alcool polyvinylique jusqu'au coeur de ses cristaux, l'absorption se fait sous une action mécanique douce de brassage et sous une température faible et contrôlée telle que la fusion des cristaux d'alcool polyvinylique ayant absorbé à coeur l'agent plastifiant ne se produise pas. En effet, ladite absorption se fait sous une température faible et contrôlée et sous l'action d'un malaxage à faible taux de cisaillement dont le taux peut varier d'environ 10 seconde⁻¹ à 10³ seconde⁻¹ et plus préférentiellement de 10 à 500 seconde⁻¹.

Ainsi, selon l'invention, la zone dite d'absorption :
- dans le cas où elle est une zone de pré-mélange indépendante d'une extrudeuse, doit permettre au mélange un temps de séjour suffisant sous un malaxage peu cisaillant et sous une température contrôlée inférieure à la température de fusion des cristaux d'alcool polyvinylique plastifiés, telle que la température du mélange formé de l'alcool polyvinylique et de l'agent plastifiant en cours d'absorption totale soit inférieure d'au moins 10 °C et préférentiellement d'au moins 20 °C à la température de fusion des cristaux d'alcool polyvinylique plastifiés, c'est à dire ayant absorbé à coeur l'agent plastifiant;
- dans le cas où elle est une zone incorporée dans un malaxeur continu de type extrudeuse, a une longueur déterminée pour donner un temps de séjour suffisant au mélange formé et pour permettre aux cristaux d'alcool polyvinylique d'absorber jusqu'à coeur ledit agent plastifiant, et ce, sous un malaxage préférentiellement de faible cisaillement et sous une température contrôlée et réglée, inférieure à la température de fusion des cristaux d'alcool polyvinylique plastifiés. Cette zone peut avoir une longueur comprise entre 10 % à 70 % de la longueur totale de la vis de l'extrudeuse. La longueur totale de la vis de l'extrudeuse est constituée par sa partie active, c'est à dire que cette longueur exclue toute la partie permettant l'accouplement et l'entraînement mécanique de ladite vis.

Selon l'invention, la préparation de la composition peut être pratiquée dans une chambre de pré-mélange, la fusion et l'extrusion dudit mélange obtenu s'effectuant par la suite dans un malaxeur de type extrudeuse.

Selon l'invention, dans le cas d'un malaxeur de type extrudeuse, l'origine de la zone d'absorption du plastifiant au coeur des cristaux d'alcool polyvinylique se situe à une distance exprimée en % par rapport à la longueur totale de la vis, préférentiellement comprise entre 8 % et 25 % de l'extrémité amont de la vis dudit malaxeur.

Dès lors, et selon l'invention, l'agent plastifiant de l'alcool polyvinylique peut être introduit :
- Dans le malaxeur de type pré-mélangeur simultanément avec l'alcool polyvinylique ou bien préférentiellement séparément après que l'alcool polyvinylique ait été porté à un niveau de température favorable, inférieur d'au moins 10 °C et préférentiellement d'au moins 20 °C à la température de fusion des cristaux d'alcool polyvinylique plastifiés a coeur.
- Dans le malaxeur de type extrudeuse à une distance de l'extrémité amont de la vis comprise entre 0 % et 33 % et préférentiellement comprise entre 8 % et 25 %.

Dans le cas où la préparation de la composition selon l'invention est conduite dans un malaxeur de type pré-mélangeur, cette préparation peut être pratiquée dans un dispositif tel que par exemple un Farrel^{®}, un Buss^{®} ou un Guédu^{®}, comportant des moyens de mélange à faible taux de cisaillement et de régulation thermique, la fusion et l'extrusion de ladite composition obtenue étant conduite par la suite dans un malaxeur de type extrudeuse.

Les alcools polyvinyliques utilisés dans le procédé selon l'invention sont généralement préparés de manière connue, par saponification, préférentiellement par hydrolyse d'esters polyvinyliques, préférentiellement d'acétate de polyvinyle, ces alcools polyvinyliques ayant un poids moléculaire compris entre 10 000 et 200 000 et un degré d'hydrolyse compris entre 50 % et 100 %, préférentiellement compris entre 73 % et 99,5 %.

L'agent plastifiant mis en oeuvre selon l'invention doit être compatible avec l'alcool polyvinylique mis en oeuvre. Cet agent plastifiant peut être choisi dans le groupe constitué par les polyols aliphatiques et leurs dérivés, en particulier l'éthylèneglycol, le diéthylèneglycol, le triéthylèneglycol et les polyéthylèneglycols de poids moléculaires relativement faible, les polyoxyéthylèneglycols, le triméthylèneglycol, le propylèneglycol, le néopentylglycol, les propanediols, les butanediols, les pentanediols, le propanetriol ou glycérol ou glycérine, le triméthylolpropane, les hexanetriols, le pentaerythritol, le sorbitol et leurs dérivés pris seuls ou en mélange.

La concentration en agent plastifiant introduit dans la composition selon l'invention est d'au plus 90 % en poids par rapport au poids total de la composition, c'est à dire par rapport au poids total du mélange comprenant l'alcool polyvinylique, l'agent plastifiant et tous les éventuels autres agents connus entrant dans de telles compositions, et en particulier les charges minérales ou organiques. Cette concentration en agent plastifiant est comprise entre 90 % et 50 % en poids du mélange quand la composition est destinée à la production d'un gel, et comprise entre 1 % et au plus 50 % en poids, préférentiellement comprise entre 15 % et 45 % en poids du mélange quand la composition est destinée à la production de granulés.

Selon l'invention, il est également possible d'introduire, dans la composition à base d'alcool polyvinylique, un agent dispersant compatible avec les alcools polyvinyliques mis en oeuvre qui favorise la diffusion du plastifiant dans les cristaux d'alcool polyvinylique et qui, dès lors, a propension à diminuer les temps d'absorption complète dudit plastifiant au coeur des cristaux d'alcool polyvinylique. Un tel agent dispersant qu'il est souhaitable d'utiliser peut être choisi parmi ceux compatibles avec les alcools polyvinyliques et plus particulièrement, par exemple, parmi les mono ou diesters de glycérol et d'acide gras préférentiellement en C₆ à C₁₈.

La concentration en cet agent dispersant est généralement comprise entre 0,05 partie en poids à 1 partie en poids et préférentiellement de 0,1 partie à 0,5 partie en poids du mélange constitué par l'alcool polyvinylique et le plastifiant.

Selon l'invention, il est aussi possible d'introduire dans la composition à base d'alcool polyvinylique, d'autres agents bien connus de l'état de la technique. Ces divers agents peuvent être, par exemple, des stabilisants thermiques ou photochimiques, des antioxydants, des lubrifiants, des antistatiques, des ignifugeants, des colorants, des arômes, des parfums ou autres encore qui peuvent être introduits selon les quantités bien connues de l'homme de l'art.

Certaines charges telles que des matières pulvérulentes minérales ou organiques peuvent être également introduites dans la composition créée selon l'invention, y compris les nanocharges.

Les matières pulvérulentes minérales concernées peuvent être choisies parmi des sels et/ou des oxydes minéraux ayant subi ou non un traitement de surface, tels que les carbonates de calcium, de magnésium, de zinc, la dolomie, la chaux, la magnésie, le trihydroxyde d'aluminium, l'alumine, des argiles et autres silico-alumineux, préférentiellement le talc, le kaolin, le mica, la bentonite, la wollastonite ou encore des matières minérales pulvérulentes synthétiques telles que les billes de verre, les nanocharges.

Les matières pulvérulentes organiques d'origine naturelle ou synthétique peuvent aussi être introduites, telles que par exemple les polymères naturels biodégradables, en particulier les glucides tels que des polysaccharides et, parmi eux, l'amidon, la cellulose sous forme de poudre de bois et/ou de fibres de cellulose, le noir de carbone, les poudres de polymères synthétiques, en particulier les poudres de polymères thermodurs.

Toutes ces matières pulvérulentes d'origine minérale ou organique peuvent être mises en oeuvre seules ou en combinaison.

Les dimensions de ces matières pulvérulentes minérales ou organiques sont généralement comprises entre 0,01 et 300 µm et préférentiellement entre 0,1 et 100 µm. Dans le cas particulier des nanocharges, leur plus grande dimension est comprise entre 100 nanomètres et 200 nanomètres.

Les matières pulvérulentes minérales ou organiques peuvent être introduites dans les compositions selon l'invention à raison de 0,01 % à 70 % en poids par rapport au poids total de la composition et préférentiellement à raison de 5 % à 30 % en poids par rapport au poids total de ladite composition.

Selon l'invention, et comme cela a été précédemment évoqué, dans la zone d'alimentation qui correspond à l'introduction de l'alcool polyvinylique et de l'agent plastifiant, est assurée la mise en température du mélange physique formé par ces composants, cette température étant toujours inférieure au point de fusion des cristaux d'alcool polyvinylique plastifiés, de telle sorte que ne se produise pas un début de fusion dans cette zone : la température du mélange physique des constituants précités doit être inférieure d'au moins 10 °C et préférentiellement d'au moins 20 °C à la température de fusion desdits cristaux plastifiés à coeur.

Dans le cas où cette zone d'alimentation est incluse dans un malaxeur continu de type extrudeuse, cette zone d'alimentation a une longueur comprise entre 8 % et 25 % et préférentiellement entre 16 % et 21 % de la longueur totale de la vis de l'extrudeuse.

Comme précédemment dit selon l'invention, dans la zone d'absorption totale de l'agent plastifiant par les cristaux d'alcool polyvinylique chauds, la température du mélange constitué par l'alcool polyvinylique et le plastifiant en cours d'absorption totale doit être inférieure à la température de fusion des cristaux d'alcool polyvinylique plastifiés d'au moins 10 °C et préférentiellement d'au moins 20 °C pour que ladite absorption se fasse complètement à coeur des cristaux et sans qu'il y ait amorce de fusion desdits cristaux.

Selon l'invention, dans la zone de fusion du mélange constitué par les cristaux d'alcool polyvinylique imprégnés à coeur de l'agent plastifiant, la température à laquelle est porté le mélange est choisie dans un intervalle autour de la température de fusion dudit polymère seul pour assurer la fusion de quasiment tous les cristaux d'alcool polyvinylique imprégnés dudit plastifiant et préférentiellement légèrement supérieure à ladite température de fusion de l'alcool polyvinylique.

La température dudit mélange dans cette zone de fusion est généralement choisie dans un intervalle de plus ou moins environ 30 °C par rapport à la température de fusion de l'alcool polyvinylique seul et préférentiellement de plus ou moins environ 15 °C, dont le centre est la température de fusion dudit alcool polyvinylique seul.

La vitesse de montée en température du mélange dans la zone de fusion est choisie de telle sorte que la fusion des cristaux d'alcool polyvinylique ayant absorbé à coeur le plastifiant soit rapide et complète, c'est à dire franche et homogène. L'énergie thermique apportée pour cette fusion est pour partie d'origine mécanique, c'est à dire est pour partie fournie par un effet mécanique de cisaillement. Pour ce faire, la zone de fusion est pourvue de moyens de chauffage et de régulation thermique de telle sorte que la fusion des cristaux d'alcool polyvinylique plastifiés se fasse sans choc thermique et à la température choisie pour ladite fusion.

Pour ce faire, ladite zone de fusion est la plus courte possible et sa longueur est comprise entre 10 % et 25 % et préférentiellement comprise entre 15 % et 21 % de la longueur totale de la vis.

Selon l'invention, à la sortie de la zone de fusion, le mélange fondu d'alcool polyvinylique et du plastifiant est soumis, dans une zone appropriée, à un refroidissement rapide par abaissement de sa température à un niveau de température compris entre la température de fusion de l'alcool polyvinylique plastifié à coeur et la température de fusion de l'alcool polyvinylique seul, c'est à dire non plastifié. Ce niveau de température est toujours inférieur au point de fusion de l'alcool polyvinylique seul mais très légèrement supérieur au point de fusion des cristaux d'alcool polyvinylique plastifiés pour éviter et maîtriser le risque de dégradation du mélange par la poursuite d'une évolution thermique ascendante : le niveau de température est généralement supérieur d'au moins 3 °C et préférentiellement d'au moins 5 °C à la température de fusion de l'alcool polyvinylique plastifié.

Dans cette même zone de refroidissement, est produit également le dégazage sous vide du mélange fondu et en cours de refroidissement, de telle sorte que soient éliminés dudit mélange fondu tous les composés rendus volatiles lors du chauffage dudit mélange au cours des opérations de malaxage et fusion.

La zone de refroidissement et de dégazage a une longueur comprise préférentiellement entre 12 % et 21 % de la longueur totale de la vis.

Enfin, le mélange à base d'alcool polyvinylique et de plastifiant, fondu, refroidi et dégazé, est simultanément soumis dans une zone adéquate à une compression et à un refroidissement plus poussé afin de placer ledit mélange à un niveau de viscosité propre à son extrusion et produire un extrudat par extrusion destiné à être utilisé par la suite dans la production d'articles selon les méthodes développées en plasturgie.

Pour permettre la production plus aisée encore d'une composition à base d'alcool polyvinylique exempte de dégradation, il est possible, selon l'invention, que le mélange-malaxage, l'absorption, la fusion, le refroidissement et l'extrusion de ladite composition se fasse sous atmosphère contrôlée, préférentiellement exempte d'oxygène libre, telle que par exemple sous un courant d'azote.

Selon l'invention, également le procédé de production par malaxage - fusion - extrusion au moyen d'un malaxeur de type extrudeuse d'une composition thermoplastique à base d'au moins un alcool polyvinylique exempte d'infondus et de dégradation physico-chimique dudit alcool polyvinylique se manifestant dès lors par un jaunissement, comprenant également au moins un agent plastifiant dudit alcool polyvinylique, procédé qui comporte des zones d'actions consistant en :
- l'introduction de(s) l'alcool(s) polyvinylique(s) cristallin(s) et de (s) l'agent (s) plastifiant (s), pour y être mélangés sous agitation, le mélange étant porté à une température inférieure à la température de fusion dudit mélange,
- la fusion sous une température appropriée dans une zone de fusion du mélange chaud provenant de la zone d'alimentation et de mélange sous agitation,
- le dégazage du mélange fondu provenant de la zone de fusion dans une zone de dégazage pour en éliminer tous les composés volatiles résultant de la fusion du mélange,
- la compression dans une zone de compression du mélange fondu dégazé et son extrusion à une température appropriée,
se caractérise en ce que, entre la zone d'introduction de l'alcool polyvinylique et de fusion de la composition résultant du mélange des composants, on crée :
- une zone d'introduction de l'agent plastifiant de l'alcool polyvinylique située à une distance comprise entre 12 % et 21 % de l'extrémité amont dudit malaxeur et,
- une zone d'absorption totale de l'agent plastifiant par les cristaux d'alcool polyvinylique et à coeur de ses cristaux, l'absorption se faisant sous une action mécanique douce de brassage et sous une température faible et contrôlée telle que la fusion des cristaux d'alcool polyvinylique ayant absorbé à coeur l'agent plastifiant ne se produise pas.

Ainsi et selon l'invention, il apparaît que le procédé créé se distingue des procédés de l'état de la technique en ce qu'il comporte parmi les zones constitutives d'un malaxeur de type extrudeuse, cinq zones principales d'actions successives qui consistent :
- dans une première zone principale, dite zone d'alimentation, à introduire le composant polymère par la trémie d'alimentation, puis à y soumettre simultanément le composant polymère à un malaxage doux sous faible action de cisaillement, à un entraînement mécanique dans l'axe du malaxeur et à un échauffement à une température classique dans une zone d'alimentation et éventuellement à injecter dans ladite première zone tout ou partie de l'agent plastifiant de l'alcool polyvinylique,
- dans une deuxième zone principale, dite par la suite zone d'absorption, et si l'injection n'a pas été réalisée ou si elle n'a été réalisée qu'en partie dans la première zone, à injecter dans la masse chaude mais non fondue des cristaux du polymère, le plastifiant ou l'autre partie du plastifiant qui joue un rôle lubrifiant de la vis du malaxeur tout en poursuivant simultanément les actions de malaxage doux, d'entraînement mécanique du mélange et de maintien en température du mélange jusqu'à ce que les cristaux chauds mais non fondus d'alcool polyvinylique aient absorbé la totalité de l'agent plastifiant, cette absorption totale se faisant au coeur desdits cristaux chauds, non fondus, qui se dilatent et se ramollissent sous l'effet combiné du plastifiant et de la température du milieu ayant la plus faible valeur possible de telle sorte que cette température soit toujours inférieure à la température de fusion des cristaux d'alcool polyvinylique plastifiés ;
- dans une troisième zone principale, à provoquer la fusion complète et rapide des cristaux d'alcool polyvinylique ayant absorbé la totalité du plastifiant en les portant brièvement à une température maîtrisée proche par excès ou défaut de la température de fusion dudit polymère seul pour que la fusion soit homogène et non dégradante ;
- dans une quatrième zone principale, à abaisser rapidement la température du mélange fondu à un niveau très légèrement supérieur au point de fusion des cristaux d'alcool polyvinylique ayant absorbé à coeur l'agent plastifiant pour maîtriser le risque de dégradation thermique et à dégazer le mélange fondu et refroidi pour en éliminer tous les composés volatiles ;
- dans une cinquième zone principale, à compresser le mélange fondu et dégazé, tout en poursuivant le refroidissement pour empêcher toute dégradation du mélange fondu pour qu'il reste à un niveau de température toujours très légèrement supérieur au point de fusion des cristaux d'alcool polyvinylique plastifiés à coeur et placer ledit mélange fondu et dégazé à un niveau de viscosité nécessaire à son extrusion.

Selon une variante de l'invention, l'injection de l'agent plastifiant peut se faire pour partie dans la première zone principale d'alimentation et pour l'autre partie, dans la deuxième zone principale d'absorption de telle sorte que la totalité de l'agent plastifiant soit introduit dans le malaxeur de type extrudeuse à une distance de son extrémité amont comprise entre 0 % et 33 % et préférentiellement entre 8 % et 25 % de la longueur de la vis.

Le malaxeur de type extrudeuse utilisé pour la production selon l'invention d'une composition thermoplastique à base d'alcool polyvinylique sous forme de produits d'extrusion, peut être de type, par exemple, MARIS, CLEXTRAL, WERNER-PFLEIDERER, à double vis, corotative ou contrarotative, dont le fourreau est divisé en zones possédant chacune un système de chauffage et un système de refroidissement pour maîtriser correctement la température du mélange dans chaque zone.

Le malaxeur de type extrudeuse est également équipé de plusieurs entrées de matériaux solides ou liquides qui concernent l'alcool polyvinylique, l'agent plastifiant, éventuellement des charges minérales et autres agents connus qui peuvent être également introduits.

La vitesse de rotation des vis du malaxeur est préférentiellement comprise entre 100 et 600 tours par minute, c'est à dire que cette vitesse de rotation est plutôt faible, de telle sorte que le taux de cisaillement appliqué au mélange d'alcool polyvinylique et de plastifiant soit le plus faible possible pour limiter l'échauffement mécanique dudit mélange et que le temps de séjour dudit mélange y soit suffisant pour que l'absorption totale de l'agent plastifiant par l'alcool polyvinylique se fasse totalement à coeur des cristaux dudit alcool polyvinylique.
La composition selon l'invention à base d'alcool polyvinylique peut être extrudée sous forme de produits d'extrusion refroidis, le refroidissement pouvant s'effectuer :
- par l'intermédiaire d'un fluide gazeux qui peut être de l'air,
- ou par un fluide liquide, non solvant de l'alcool polyvinylique, un tel fluide de refroidissement pouvant être une solution aqueuse saline saturée.

Par le procédé selon l'invention il est possible de produire, de façon reproductible des gels ou des granulés d'alcool polyvinylique homogènes et exempts de dégradation, destinés à être mis en oeuvre par fusionextrusion selon les techniques de la plasturgie dans la production d'articles tels que par exemple des films respirables ou non pour les domaines de l'alimentation, du médical, du paramédical ou encore d'autres articles tels que flacons ou autres conteneurs. Tous ces articles peuvent être, selon les nécessités de leurs applications et de leur élimination, au moins pour partie biodégradables, ou encore hydrosolubles dans l'eau froide ou l'eau chaude, selon l'alcool polyvinylique utilisé.

### Exemple 1 : concerne l'invention

On a préparé, sous forme de granulés et selon le procédé de l'invention, une composition thermoplastique à base d'alcool polyvinylique comprenant également un agent plastifiant au moyen d'une extrudeuse continue.

La formule de la composition est la suivante :
- alcool polyvinylique ayant un taux d'hydrolyse de 88 % et un point de fusion de 188°C : 75 % en poids
- agent plastifiant : glycérine ou glycérol : 20 % en poids
- agent antibloc : talc : 5 % en poids

L'extrudeuse mise en oeuvre est une extrudeuse MARIS, bi-vis, de type corotative de diamètre D = 40mm et de longueur 44D, dont la vitesse de rotation est de 150 t/mn.

Le fourreau de ladite extrudeuse est divisé en 11 zones comprenant parmi elles les 5 zones principales d'action définies dans l'invention.

Chacune des zones possède un système de chauffage et un système de refroidissement par circulation d'eau et un système de régulation de la température.

Cette extrudeuse comporte :
- dans la première zone, une entrée de l'alcool polyvinylique,
- dans la deuxième zone, un injecteur de l'agent plastifiant,
- dans les zones 4 et 6, deux entrées latérales possibles pour l'introduction de charges minérales,
- dans les zones 5 et 7, deux entrées possibles pour d'autres agents liquides,
- dans la zone 9, une sortie de dégazage sous vide,
- une filière- à trous, montée en bout de vis, permettant une extrusion sous forme de joncs qui sont refroidis et découpés en granulés.

Les cinq zones principales d'actions définies dans le cadre de l'invention, dans lesquelles les températures indiquées sont celles contrôlées en fourreau d'extrudeuse, sont les suivantes :
• La zone principale d'alimentation recouvre les trois premières zones du fourreau : la longueur en est de 10D. L' alcool polyvinylique y est introduit en tête et l'agent plastifiant y est injecté à une distance de 6D. Le mélange y est comprimé et monté en température de 100°C (zone 1) jusqu'à 130°C (zone 3), c'est à dire à une température maximale inférieure de 50°C à celle de la température de fusion des cristaux de l'alcool polyvinylique plastifié.
• La zone principale d'absorption selon l'invention recouvre en tout ou partie les zones 3 à 5 du fourreau, la longueur en est de 10D. Elle constitue la zone principale la plus importante du procédé selon l'invention car elle a pour but de faire absorber totalement l'agent plastifiant par les cristaux d'alcool polyvinylique.
Cette zone d'absorption est équipée d'éléments mécaniques de brassage qui favorisent le mélange des phases solide et liquide, sans cisaillement excessif, de telle sorte que l'absorption de l'agent plastifiant par l'alcool polyvinylique à coeur des cristaux se fait sans amorce de fusion du mélange ni dégradation. Dès lors, cette zone d'absorption où se produit une action de mélange des composants par séparation et croisement de flux de matière, ne reçoit aucun excès d'énergie mécanique et, de ce fait, contrôle bien la température de la masse résultant du mélange.
Cette température est d'environ de 140 °C à l'extrémité amont et de 150 °C à l'extrémité aval de la zone d'absorption. La température du mélange formé par l'alcool polyvinylique et le plastifiant est inférieure à la température de fusion dudit alcool polyvinylique seul.
La température de fusion mesurée de l'alcool polyvinylique ayant absorbé à coeur l'agent plastifiant est de 163,7 °C.
Le taux de cisaillement appliqué au mélange dans la zone d'absorption est de l'ordre de 10 à 100 seconde⁻¹.
Le temps de séjour du mélange formé par l'alcool polyvinylique et le plastifiant dans ladite zone d'absorption est de environ 25 à 30 secondes.
• La zone principale de fusion recouvre les zones 6 et 7 du fourreau. Sa longueur en est de 8D. Dans cette zone de fusion la montée en température y est rapide d'une extrémité (180 °C) à l'autre (190 °C) puisque à l'entrée de la zone principale de fusion, la température du mélange est proche d'environ 150°C. Dès lors, la fusion du mélange dans cette zone est rapide, complète, sans dégradation de l'alcool polyvinylique, dans cette zone relativement courte, bien que soient utilisés dans cette zone des éléments mécaniques simultanément de cisaillement et de transport, cette double fonction permet d'homogénéiser l'énergie thermique développée et d'effacer les zones de surchauffe qui, dans l'état de la technique, provoquent la dégradation de l'alcool polyvinylique.
• La zone principale de refroidissement rapide et de dégazage recouvre les zones 8 et 9 du fourreau. La longueur en est de 8D. Dans cette zone de refroidissement rapide et de dégazage, la température du mélange fondu diminue de l'extrémité amont (190°C sur fourreau) à son extrémité avale (150°C sur fourreau) de façon à maintenir le mélange fondu à un niveau de température très proche de sa température de fusion). Dans cette même zone principale est effectué le dégazage sous vide du mélange fondu afin d'en éliminer les vapeurs de l'agent plastifiant et les vapeurs d'eau, résultant de l'eau absorbée et/ou de constitution par les cristaux d'alcool polyvinylique et libérée lors du chauffage et de la fusion de la matière.
• La zone principale de compression et d'extrusion recouvre les zones 10 et 11 du fourreau : la longueur de cette zone est de 8D. Dans cette zone, le mélange à l'état fondu et déjà refroidi est encore soumis à un refroidissement supplémentaire pour lui donner la bonne fluidité avant le passage en filière. Le mélange à l'état fondu y est soumis à une compression pour éliminer les dernières fractions gazeuses, l'homogénéiser et limiter le risque de dégradation de l'alcool polyvinylique par choc thermique. Dans cette zone la température du fourreau est abaissée de 150°C (à l'entrée) à 130°C, de telle sorte que la température du mélange fondu avant son extrusion soit abaissée à environ 175°C pour assurer son extrusion. Ainsi, le profil de température de la vis est de :

| Zone | 1 | 2 | 3 | 4 | 5 | 6 | 7 | 8 | 9 | 10 | 11 |
|---|---|---|---|---|---|---|---|---|---|---|---|
| Température de fourreau | 100 | 130 | 130 | 140 | 150 | 180 | 190 | 190 | 150 | 130 | 130 |

La température de la filière au moment de l'extrusion est de 160°C. A la sortie de la filière, les joncs formés sont refroidis par passage dans un milieu aqueux salin maintenu à une température appropriée. Les joncs refroidis sont coupés en formant les granulés. Les caractéristiques de fonctionnement de l'extrudeuse sont :
* puissance moteur : 38 Kw
* ampérage : 54 A
* débit : 35 Kg / H

Le temps de séjour total de la matière dans l'extrudeuse est de environ 1 minute et 25 secondes.

La composition préparée et transformée en granulés selon le procédé de l'invention :
- offre une couleur translucide opalescente équivalente à celle des cristaux d'alcool polyvinylique et ayant une valeur de b* égale à 5,2
- révèle, par observation de bandes extrudées une quasi absence d'infondus.

### Exemple 2 : concerne l'invention

On a préparé, sous forme de granulés et selon le procédé de l'invention, une composition thermoplastique à base d'alcool polyvinylique comprenant également un agent plastifiant au moyen d'une extrudeuse continue.

La formule de la composition est la suivante :
- alcool polyvinylique ayant un taux d'hydrolyse de 98 % et un point de fusion de 210°C : 80 % en poids
- agent plastifiant : glycérine ou glycérol : 15 % en poids
- agent antibloc : talc : 5 % en poids.

L'extrudeuse mise en oeuvre est la même que celle de l'exemple 1, c'est à dire est une extrudeuse MARIS, bi-vis, de type corotative de diamètre D = 40mm et de longueur 44D, dont la vitesse dé rotation est de 150 t/mn.

Le fourreau de ladite extrudeuse est divisé en 11 zones comprenant parmi elles les 5 zones principales d'action définies dans l'invention, dont en particulier la zone principale d'absorption qui assure l'absorption de l'agent plastifiant séparé par les cristaux d'alcool polyvinylique jusqu'à coeur desdits cristaux.

Chacune des zones possède un système de chauffage et un système de refroidissement par circulation d'eau et un système de régulation de la température.

Le profil de vis est également le même que celui de l'exemple 1.

Le profil de température dans chaque zone de l'extrudeuse est de :

| Zone | 1 | 2 | 3 | 4 | 5 | 6 | 7 | 8 | 9 | 10 | 11 |
|---|---|---|---|---|---|---|---|---|---|---|---|
| Température de fourreau | 60 | 140 | 150 | 160 | 180 | 190 | 210 | 210 | 180 | 170 | 170 |

A la sortie de la filière, les joncs formés sont refroidis par passage dans un milieu aqueux salin maintenu à une température appropriée. Les joncs refroidis sont coupés en formant les granulés. Les caractéristiques de fonctionnement de l'extrudeuse sont :
* puissance moteur : 38 Kw
* ampérage : 60 A
* débit : 36 Kg / H

La composition préparée et transformée en granulés selon le procédé de l'invention :
- offre une couleur translucide opalescente équivalente à celle des cristaux d'alcool polyvinylique et ayant une valeur de b* égale à 9,0
- révèle par observation de bandes extrudées une quasi absence d'infondus.

### Exemple 3 : concerne l'invention

On a préparé, sous forme de granulés et selon le procédé de l'invention, une composition thermoplastique à base d'alcool polyvinylique comprenant également un agent plastifiant au moyen d'une extrudeuse continue.

La formule de la composition est la suivante :
- alcool polyvinylique :
   * ayant un taux d'hydrolyse de 98 % et un point de fusion de 210 °C : 35 % en poids
   * ayant un taux d'hydrolyse de 88 % et un point de fusion de 188 °C : 20 % en poids
   * ayant un taux d'hydrolyse de 92 % et un point de fusion de 202 °C : 20 % en poids
- agent plastifiant : glycérine ou glycérol : 20 % en poids
- agent antibloc : talc : 5 % en poids.

L'extrudeuse mise en oeuvre est la même que celle de l'exemple 1, c'est à dire est une extrudeuse MARIS, bi-vis, de type corotative de diamètre D = 40mm et de longueur 44D, dont la vitesse de rotation est de 180 t/mn.

Le fourreau de ladite extrudeuse est divisé en 11 zones comprenant parmi elles les 5 zones principales d'action définies dans l'invention, dont en particulier la zone principale d'absorption qui assure l'absorption de l'agent plastifiant séparé par les cristaux d'alcool polyvinylique jusqu'à coeur desdits cristaux.

Chacune des zones possède un système de chauffage et un système de refroidissement par circulation d'eau et un système de régulation de la température.

Le profil de vis est également le même que celui de l'exemple 1.

Le profil de température dans chaque zone de l'extrudeuse est de :

| Zone | 1 | 2 | 3 | 4 | 5 | 6 | 7 | 8 | 9 | 10 | 11 |
|---|---|---|---|---|---|---|---|---|---|---|---|
| Température de fourreau | 100 | 180 | 180 | 190 | 200 | 210 | 240 | 240 | 190 | 170 | 170 |

A la sortie de la filière, les joncs formés sont refroidis par passage dans un milieu aqueux salin maintenu à une température appropriée. Les joncs refroidis sont coupés en formant les granulés. Les caractéristiques de fonctionnement de l'extrudeuse sont :
* puissance moteur : 38 Kw
* ampérage : 54 A
* débit : 40 Kg / H

La composition préparée et transformée en granulés selon le procédé de l'invention :
- offre une couleur translucide opalescente équivalente à celle des cristaux d'alcool polyvinylique et ayant une valeur de b* égale à 9,6
- révèle par observation de bandes extrudées une quasi absence d'infondus.

### Exemple 4 : concerne l'état de la technique

La composition thermoplastique de l'exemple 1 à base d'alcool polyvinylique, comprenant aussi un agent plastifiant, a été préparée sous forme de granulés au moyen de l'extrudeuse MARIS décrite dans ledit exemple 1.

Toutefois, l'extrudeuse MARIS mise en oeuvre dans le présent exemple est démunie de la zone principale d'absorption, objet de l'invention.

Par ailleurs, pour être conforme à l'état de la technique, le profil de vis utilisé dans le présent exemple est tel qu'il combine cisaillement et chaleur imposés au mélange formé des composants car pour obtenir des granulés sans infondus, le taux de cisaillement doit être important pour casser, chauffer et disperser les cristaux d'alcool polyvinylique.

De même, alors que les divers composants sont introduits dans l'extrudeuse comme dans l'exemple 1, le profil de température de la vis en est différent car la fusion du mélange formé de l'alcool polyvinylique et de l'agent plastifiant qui n'est pas, dans le cas présent, absorbé à coeur des cristaux dudit alcool, est rapidement conduite et totalement réalisée à l'extrémité avale de la zone 3 du fourreau.

Le profil de température dans chaque zone de l'extrudeuse est de :

| Zone | 1 | 2 | 3 | 4 | 5 | 6 | 7 | 8 | 9 | 10 | 11 |
|---|---|---|---|---|---|---|---|---|---|---|---|
| Température de fourreau | 80 | 140 | 200 | 190 | 150 | 150 | 140 | 140 | 170 | 170 | 170 |

La température de la filière au moment de l'extrusion est de 160°C.

Les conditions de refroidissement des joncs extrudés et de granulation sont inchangées.

Les caractéristiques de fonctionnement de l'extrudeuse selon l'état de la technique sont :
* puissance moteur : 38 Kw
* ampérage : 60 A
* débit : 30 Kg / H

Les granulés obtenus offrent une couleur relativement jaunâtre par rapport à la couleur opalescente des cristaux d'alcool polyvinylique. Une observation au microscope montre la présence d'un certain nombre d'infondus (b* = 11,5).

## Revendications

1. Procédé de production par malaxage - fusion - extrusion d'une composition thermoplastique à base d'au moins un alcool polyvinylique, exempte d'infondus et de dégradation physico-chimique dudit alcool polyvinylique se manifestant par un jaunissement, composition comprenant également au moins un agent plastifiant dudit alcool polyvinylique et éventuellement d'autres agents, procédé qui comporte des zones d'actions consistant en :
- l'introduction de(s) l'alcool(s) polyvinylique(s) cristallin(s) et de(s) l'agent(s) plastifiant(s), en une zone d'alimentation pour y être mélangés sous agitation et portés à une température inférieure à la température de fusion dudit mélange,
- la fusion sous une température appropriée dans une zone de fusion du mélange chaud provenant de la zone d'alimentation et de mélange sous agitation,
- le dégazage du mélange fondu provenant de la zone de fusion dans une zone de dégazage pour en éliminer tous les composés volatiles résultant de la fusion du mélange,
- la compression dans une zone de compression du mélange fondu dégazé et son extrusion à une température appropriée,
procédé dans lequel entre la zone d' introduction et de mélange des composants et la zone de fusion du mélange des composants, on crée une zone d'absorption totale de l'agent plastifiant par les cristaux d'alcool polyvinylique jusqu'au coeur desdits cristaux, l'absorption se faisant sous l'action d'un malaxage à faible taux de cisaillement et sous une température faible et contrôlée telle que la fusion des cristaux d'alcool polyvinylique ayant absorbé à coeur l'agent plastifiant ne se produise pas.

2. Procédé selon la revendication 1, **caractérisé en ce que** la zone d'absorption totale de l'agent plastifiant au coeur des cristaux d'alcool polyvinylique est une chambre de pré-mélange indépendante d'un malaxeur de type extrudeuse, la fusion et l'extrusion du mélange obtenu s'effectuant par la suite dans un malaxeur de type extrudeuse.

3. Procédé selon la revendication 1, **caractérisé en ce que** les zones d'action du procédé s'effectuent en totalité dans un malaxeur de type extrudeuse.

4. Procédé selon la revendication 3, **caractérisé en ce que** le malaxeur de type extrudeuse comporte, parmi ces zones constitutives, cinq zones principales d'actions successives consistant :
- dans une première zone principale, dite zone d'alimentation, à introduire le composant polymère par la trémie d'alimentation, puis à y soumettre simultanément le composant polymère à un malaxage doux sous faible action de cisaillement, à un entraînement mécanique dans l'axe du malaxeur et à un échauffement à une température classique dans une zone d'alimentation et éventuellement à injecter dans ladite première zone tout ou partie de l'agent plastifiant de l'alcool polyvinylique,
- dans une deuxième zone principale, dite zone d'absorption, et si l'injection n'a pas été réalisée ou si elle n'a été réalisée qu'en partie dans la première zone, à injecter dans la masse chaude mais non fondue des cristaux du polymère, le plastifiant ou l'autre partie du plastifiant tout en poursuivant simultanément les actions de malaxage doux, d'entraînement mécanique du mélange et de maintien en température du mélange jusqu'à ce que les cristaux chauds mais non fondus d'alcool polyvinylique aient absorbé la totalité de l'agent plastifiant, cette absorption totale se faisant au coeur desdits cristaux chauds et non fondus ;
- dans une troisième zone principale, à provoquer la fusion complète et rapide des cristaux d'alcool polyvinylique ayant absorbé la totalité du plastifiant en les portant brièvement à une température maîtrisée proche par excès ou défaut de la température de fusion dudit polymère seul pour que la fusion soit homogène et non dégradante ;
- dans une quatrième zone principale, à abaisser rapidement la température du mélange fondu à un niveau très légèrement supérieur au point de fusion des cristaux d'alcool polyvinylique ayant absorbé à coeur l'agent plastifiant pour maîtriser le risque de dégradation thermique et à dégazer le mélange fondu et refroidi pour en éliminer tous les composés volatiles ;
- dans une cinquième zone principale, à compresser le mélange fondu et dégazé, tout en poursuivant le refroidissement pour empêcher toute dégradation du mélange fondu pour qu'il reste à un niveau de température toujours très légèrement supérieur au point de fusion des cristaux d'alcool polyvinylique plastifiés à coeur et placer ledit mélange fondu et dégazé au niveau de viscosité nécessaire à son extrusion.

5. Procédé selon la revendication 1, **caractérisé en ce que** la zone d'absorption totale de l'agent plastifiant à coeur des cristaux d'alcool polyvinylique est munie de moyens mécaniques qui favorisent le mélange intime des composants et le transfert du mélange, sans développer un phénomène de cisaillement à l'origine de chocs thermiques importants et à l'origine de la dégradation de l'alcool polyvinylique.

6. Procédé selon la revendication 1, **caractérisé en ce que** la zone d'absorption totale de l'agent plastifiant à coeur des cristaux d'alcool polyvinylique est munie de moyens de chauffage et de régulation thermique de façon que la température du mélange formé de l'agent plastifiant et de l'alcool polyvinylique soit inférieure d'au moins 10 °C et préférentiellement d'au moins 20 °C à la température de fusion des cristaux d'alcool polyvinylique plastifiés.

7. Procédé selon la revendication 3, **caractérisé en ce que** la zone d'absorption est incorporée dans un malaxeur de type extrudeuse a une longueur comprise entre 10 % et 70 % de la longueur totale de la vis de l'extrudeuse.

8. Procédé selon la revendication 7, **caractérisé en ce que** l'origine de la zone d'absorption se situe à une distance comprise entre 8 % et 25 % de l'extrémité amont du malaxeur de type extrudeuse, par rapport à la longueur totale de la vis.

9. Procédé selon l'une ou l'autre des revendications 2 et 3, **caractérisé en ce que** l'agent plastifiant de l'alcool polyvinylique est introduit au sein de l'alcool polyvinylique après que ledit alcool ait été porté à une température inférieure d'au moins 10°C et préférentiellement d'au moins 20 °C à la température de fusion des cristaux d'alcool polyvinylique plastifiés à coeur.

10. Procédé selon la revendication 3, **caractérisé en ce que** l'agent plastifiant de l'alcool polyvinylique est introduit dans l'alcool polyvinylique à une distance de l'extrémité amont de l'extrudeuse comprise entre 0 % et 33 % et préférentiellement comprise entre 8 % et 25 %, le pourcentage étant exprimé par rapport à la longueur de la vis.

11. Procédé selon l'une au moins des revendications 1 à 10, **caractérisé en ce que** les alcools polyvinyliques mis en oeuvre ont un poids moléculaire compris entre 10 000 et 200 000.

12. Procédé selon l'une au moins des revendications 1 à 11, **caractérisé en ce que** les alcools polyvinyliques mis en oeuvre ont un degré d'hydrolyse compris entre 50 % et 100 % et préférentiellement compris entre 73 % et 99,5 %.

13. Procédé selon l'une au moins des revendications 1 à 12, **caractérisé en ce que** l'agent plastifiant est choisi dans le groupe constitué par les polyols aliphatiques et leurs dérivés, en particulier l'éthylèneglycol, le diéthylèneglycol, le triéthylèneglycol et les polyéthylèneglycols de poids moléculaire faible, les polyoxyéthyleneglycols, le triméthylèneglycol, le propylèneglycol, le néopentylglycol, les propanediols, les butanediols, les pentanediols, le propanetriol, le triméthylolpropane, les hexanetriols, le pentaerythritol, le sorbitol et leurs dérivés, pris seuls ou en mélange.

14. Procédé selon la revendication 13, **caractérisé en ce que** la concentration en agent plastifiant introduit dans la composition est d'au plus 90 % en poids par rapport au poids de la composition.

15. Procédé selon la revendication 14, **caractérisé en ce que** la concentration en agent plastifiant est comprise entre 90 % et 50 % en poids du mélange quand la composition est destinée à la production d'un gel.

16. Procédé selon la revendication 14, **caractérisé en ce que** la concentration en agent plastifiant est comprise entre 1 % et au plus 50 % en poids et préférentiellement comprise entre 15 % et 45 % en poids du mélange quand la composition est destinée à la production de granulés.

17. Procédé selon l'une au moins des revendications 1 à 16, **caractérisé en ce que** on introduit un agent dispersant favorisant la dispersion de l'agent plastifiant dans l'alcool polyvinylique et choisi dans le groupe constitué par les mono ou diesters de glycérol et d'acide gras préférentiellement en C₆ à C₁₈.

18. Procédé selon la revendication 17, **caractérisé en ce que** la concentration en agent dispersant est comprise entre 0,05 partie en poids à 1 partie en poids et préférentiellement de 0,1 partie à 0,5 partie en poids du mélange constitué par l'alcool polyvinylique et le plastifiant.

19. Procédé selon l'une au moins des revendications 1 à 18, **caractérisé en ce que** on introduit dans la composition à base d'alcool polyvinylique, d'autres agents choisis dans le groupe constitué par les stabilisants thermiques ou photochimiques, les antioxydants, les lubrifiants, les antistatiques, les ignifugeants, des colorants, des arômes, des parfums, selon les quantités bien connues.

20. Procédé selon l'une au moins des revendications 1 à 19, **caractérisé en ce que** on introduit dans la composition à base d'alcool polyvinylique des matières pulvérulentes minérales choisies parmi des sels et/ou des oxydes minéraux ayant subi ou non un traitement de surface, en particulier les carbonates de calcium, de magnésium, de zinc, la dolomie, la chaux, la magnésie, le trihydroxyde d'aluminium, l'alumine, des argiles et autres silico-alumineux, préférentiellement le talc, le kaolin, le mica, la bentonite, la wollastonite et des matières minérales pulvérulentes synthétiques en particulier les billes de verre, les nanocharges.

21. Procédé selon l'une au moins des revendications 1 à 18, **caractérisé en ce que** on introduit dans la composition à base d'alcool polyvinylique des matières pulvérulentes organiques appartenant au groupe constitué par les polymères naturels biodégradables, en particulier les glucides tels que les polysaccharides et plus particulièrement l'amidon, la cellulose sous forme de poudre et/ou de fibres, le noir de carbone, les poudres de polymères synthétiques, en particulier les poudres de polymères thermodurs.

22. Procédé selon les revendications 20 ou 21, **caractérisé en ce que** les matières pulvérulentes minérales ou organiques ont une dimension comprise entre 0,01 et 300 µm et préférentiellement comprise entre 0,1 et 100 µm et entre 100 et 200 nanomètres pour la plus grande dimension des nanocharges.

23. Procédé selon l'une au moins des revendications 20 à 22, **caractérisé en ce que** les matières pulvérulentes minérales ou organiques sont introduites dans la composition à raison de 0,01 % à 70 % en poids et préférentiellement de 5 % à 30 % en poids par rapport au poids total de ladite composition.

24. Procédé selon la revendication 4, **caractérisé en ce que** la zone d'alimentation incluse dans un malaxeur de type extrudeuse a une longueur comprise entre 8 % et 25 % et préférentiellement entre 16 % et 21 % de la longueur totale de la vis de l'extrudeuse.

25. Procédé selon l'une au moins des revendications 1 à 24, **caractérisé en ce que** la zone de fusion, dans le malaxeur de type extrudeuse, du mélange formé des cristaux d'alcool polyvinylique ayant absorbé à coeur l'agent plastifiant a une longueur comprise entre 10 % et 25 % et préférentiellement comprise entre 15 % et 21 % de la longueur totale de la vis.

26. Procédé selon l'une au moins des revendications 1 à 25, **caractérisé en ce que** la température dans la zone de fusion du malaxeur de type extrudeuse est comprise dans un intervalle de plus ou moins 30 °C et préférentiellement de plus ou moins 15 °C dont le centre est la température de fusion de l'alcool polyvinylique seul.

27. Procédé selon l'une au moins des revendications 1 à 26, **caractérisé en ce que** le mélange fondu provenant de la zone de fusion, passe dans une zone de refroidissement rapide et de dégazage sous vide, la température du mélange fondu étant abaissée à une température toujours inférieure à la température de fusion de l'alcool polyvinylique seul et portée à une température supérieure d'au moins 3 °C et préférentiellement d'au moins 5 °C à la température de fusion des cristaux d'alcool polyvinylique plastifiés à coeur.

28. Procédé selon la revendication 27, **caractérisé en ce que** la zone de refroidissement et de dégazage du mélange fondu a une longueur comprise entre 12 % et 21 % de la longueur totale de la vis.

29. Procédé selon l'une au moins des revendications 4 à 26, **caractérisé en ce que** mélange, malaxage, absorption, fusion, refroidissement et extrusion de la composition se font sous atmosphère contrôlée d'azote.

30. Procédé selon la revendication 4, **caractérisé en ce que** l'agent plastifiant est introduit, pour une partie, dans la zone principale de mélange et, pour l'autre partie, dans la zone principale d'absorption.

31. Procédé selon l'une au moins des revendications 4 à 30, **caractérisé en ce** la vitesse de rotation des vis du malaxeur est préférentiellement comprise entre 100 et 600 tours par minute.

## Claims

1. Method for production by malaxage - fusion - extrusion of a thermoplastic composition based on at least one polyvinyl alcohol, free of batch stones and physico-chemical degradation of said polyvinyl alcohol manifesting itself in the form of yellowing, the composition also comprising at least one plasticising agent of said polyvinyl alcohol and possibly other agents, said method consisting of the following action zones:
- introduction of crystalline polyvinyl alcohol(s) and plasticising agent(s) into a feeding zone to be mixed there by agitation and brought to a temperature lower than the temperature of fusion of said mixture,
- fusion at an appropriate temperature in a fusion zone of the hot mixture coming from the feeding zone and mixture under agitation,
- degassing of the melt mixture coming from the fusion zone in a degassing zone to eliminate all of the volatile compositions resulting from the fusion of the mixture,
- compression in a compression zone of the degassed melt mixture and its extrusion at an appropriate temperature,
a method in which between the zone of introduction and mixture of compositions and the fusion zone of the mixture of compositions, a zone for the total absorption of the plasticising agent by crystals of polyvinyl alcohol up to the core of said crystals is created, the absorption occurring by means of malaxage at a low shearing rate and at a low temperature and controlled such that the fusion of the crystals of polyvinyl alcohol having absorbed at core the plasticising agent does not occur.

2. Method according to claim 1, **characterised in that** the zone of total absorption of the plasticising agent at the core of the polyvinyl alcohol crystals is an independent premix chamber of a malaxator of the extruder type, the fusion and extrusion of the mixture obtained being performed afterwards in a malaxator of the extruder type.

3. Method according to claim 1, **characterised in that** the action zones of the method are all conducted in a malaxator of the extruder type.

4. Method according to claim 3, **characterised in that** the malaxator of the extruder type comprises out of said constituent zones, five principal successive action zones comprising:
- in a first principal zone, said feeding zone, to introduce the polymer composition via the feed hopper, then to subject the polymer composition simultaneously to gentle malaxation by means of a weak shearing action, to mechanical guiding in the axis of the malaxator and to heating to a standard temperature in a feed zone and possibly to inject into said first zone all or part of the plasticising agent of polyvinyl alcohol.
- in a second principal zone, said absorption zone, and if injection has not already been performed or if it has only been performed partially in the first zone, to inject polymer crystals, the plasticising agent or the other part of the plasticising agent into the hot but not melted mass, whilst simultaneously conducting gentle malaxation, mechanical guiding of the mixture and maintaining the temperature of the mixture until the hot but not melted crystals of polyvinyl alcohol have absorbed all of the plasticising agent, said total absorption taking place at the core of said hot and unmelted crystals;
- in a third principal zone to cause the complete and rapid fusion of polyvinyl alcohol crystals having absorbed all of the plasticising agent by bringing them briefly up to a control temperature which is close either higher or lower to the fusion temperature of said polymer alone so that the fusion is homogenous and non-degrading;
- in a fourth principal zone to lower rapidly the temperature of the melt mixture to a level slightly greater than the point of fusion of the polyvinyl alcohol crystals having absorbed at core the plasticising agent to control the risk of thermal degradation and to degas the melted and cooled mixture to eliminate all of the volatile compositions;
- in a fifth principal zone, to compress the melted and degassed mixture, whilst continuing cooling to prevent any degradation of the melt mixture so that it stays at a temperature that is always very slightly greater than the point of fusion of the crystals of polyvinyl alcohol plasticised at core and to give said melted and degassed mixture the level of viscosity necessary for its extrusion.

5. Method according to claim 1, **characterised in that** the zone of total absorption of the plasticising agent at the core of the crystals of polyvinyl alcohol is provided with mechanical means which facilitate the intimate mixture of the compositions and the transfer of the mixture without developing a shearing effect at the origin of significant thermal shocks and at the origin of the degradation of polyvinyl alcohol.

6. Method according to claim 1, **characterised in that** the zone of total absorption of the plasticising agent at the core of the crystals of polyvinyl alcohol is provided with heating and thermal regulation means, such that the temperature of the mixture formed from the plasticising agent and the polyvinyl alcohol is lower by at least 10° C and preferably by at least 20° C than the temperature of fusion of the polyvinyl alcohol crystals.

7. Method according to claim 3, **characterised in that** the zone of absorption is incorporated into a malaxator of the extruder type by a length which is between 10% and 70% of the total length of the extruder screw.

8. Method according to claim 7, **characterised in that** the origin of the zone of absorption is located at a distance which is between 8 % and 25 % from the upstream end of the malaxator of the extruder type in relation to the total length of the screw.

9. Method according to one or other of claims 2 and 3, **characterised in that** the plasticising agent of polyvinyl alcohol is introduced into the polyvinyl alcohol after the said alcohol has been brought to a temperature at least 10° C lower and preferably at least 20° C lower than the temperature of fusion of the crystals of polyvinyl alcohol plasticised at core.

10. Method according to claim 3, **characterised in that** the plasticising agent of polyvinyl alcohol is introduced into the polyvinyl alcohol at a distance from the upstream end of the extruder that is between 0 % and 33 % and preferably between 8 % and 25 %, the percentage being expressed in relation to the length of the screw.

11. Method according to at least one of claims 1 to 10, **characterised in that** the polyvinyl alcohols used have a molecular weight of between 10,000 and 200,000.

12. Method according to at least one of claims 1 to 11, **characterised in that** the polyvinyl alcohols used have a degree of hydrolysis of between 50 % and 100 %, preferably between 73 % and 99.5 %.

13. Method according to at least one of claims 1 to 12, **characterised in that** the plasticising agent is selected from a group comprising aliphatic polyols and derivatives thereof, in particular ethylene glycol, diethylene glycol, triethylene glycol and polyethylene glycols of low molecular weight, polyoxyethylene glycols, trimethylene glycol, propylene glycol, neopentyl glycol, propane diols, butane diols, pentane diols, propane triol, trimethylol propane, hexane triols, pentaerythritol, sorbital and derivatives thereof, taken singly or as a mixture.

14. Method according to claim 13, **characterised in that** the concentration of plasticising agent introduced into the composition is at most 90% by weight in relation to the weight of the composition.

15. Method according to claim 14, **characterised in that** the concentration of plasticising agent is between 90 % and 50 % by weight of the mixture when the composition is intended for the production of a gel.

16. Method according to claim 14, **characterised in that** the concentration of plasticising agent is between 1 % and at most 50 % by weight and preferably is between 15% and 45 % by weight of the mixture when the composition is intended for the production of granulates.

17. Method according to at least one of claims 1 to 16, **characterised in that** a dispersing agent facilitating the dispersion of the plasticising agent is introduced into the polyvinyl alcohol and selected from a group comprising mono or diesters of glycerol and fatty acid preferably in C₆ to C₁₈.

18. Method according to claim 17, **characterised in that** the concentration of dispersing agent is between 0.05 parts by weight to 1 part by weight and preferably from 0.1 part to 0.5 parts by weight of the mixture consisting of polyvinyl alcohol and the plasticiser.

19. Method according to at least one of claims 1 to 18, **characterised in that** other agents selected from a group comprising thermal or photochemical stabilisers, antioxidants, lubricants, antistatics, fire-retardants, colorants, aromas, perfumes, are introduced into the composition based on polyvinyl alcohol in known quantities.

20. Method according to at least one of claims 1 to 19, **characterised in that** mineral pulverulent materials selected from salts and/or mineral oxides having been subjected or not to a surface treatment, in particular carbonates of calcium, magnesium, zinc, dolomite, lime, magnesia, aluminium trihydroxide, alumina, clays and other aluminous silicates, preferably talc, kaolin, mica, bentonite, wollastonite and synthetic mineral pulverulent materials in particular beads glass, nanocharges are introduced into the composition based on polyvinyl alcohol.

21. Method according to at least one of claims 1 to 18, **characterised in that** organic pulverulent materials belonging to a group consisting of biodegradable natural polymers, in particular glucides such as polysaccharides and in particular starch, cellulose in the form of powder and/or fibres, carbon black, synthetic polymer powders in particular thermoset polymer powders are introduced into the composition based on polyvinyl alcohol.

22. Method according to claims 20 to 21, **characterised in that** the mineral or organic pulverulent materials have dimensions of between 0.01 and 300 µm and preferably between 0.1 and 100 µm and between 100 and 200 nanometres for the largest dimension of nanocharges.

23. Method according to at least one of claims 20 to 22, **characterised in that** the mineral or organic pulverulent materials are introduced into the composition in an amount of 0.01 % to 70 % by weight and preferably from 5 % to 30 % by weight in relation to the total weight of said composition.

24. Method according to claim 4, **characterised in that** the feeding zone included in a malaxator of the extruder type has a length of between 8% and 25% preferably between 16% and 21 % of the total length of the extruder screw.

25. Method according to at least one of claims 1 to 24, **characterised in that** the fusion zone, in the malaxator of the extruder type, of the mixture formed from crystals of polyvinyl alcohol having absorbed at core the plasticising agent has a length of between 10% and 25% and preferably between 15% and 21% of the total length of the screw.

26. Method according to at least one claims 1 to 25, **characterised in that** the temperature in the fusion zone of the malaxtaor of the extruder type is set at a level of more or less 30° C and preferably at more or less 15° C, the centre of which is the temperature of fusion of the polyvinyl alcohol alone.

27. Method according to at least one of claims 1 to 26, **characterised in that** the melted mixture coming from the fusion zone passes into a zone of rapid cooling and degassing under vacuum, the temperature of the melted mixture being lowered to a temperature than is always lower than the temperature of fusion of the polyvinyl alcohol alone and brought to temperature greater by at least 3° C and preferably at least 5° C than the temperature of fusion of the polyvinyl alcohol crystals plasticised at core.

28. Method according to claim 27 **characterised in that** the cooling and degassing zone of the melted mixture has a length of between 12 % and 21 % of the total length of the screw.

29. Method according to at least one of claims 4 to 26, **characterised in that** the mixing, malaxage, absorption, fusion, cooling and extrusion of the composition is carried out in a controlled nitrogen atmosphere.

30. Method according to claim 4, **characterised in that** the plasticising agent is introduced in part into the principal mixture zone and in part into the principal zone of absorption.

31. Method according to at least one of claims 4 to 30 **characterised in that** the speed of rotation of the screws of the malaxator is preferably between 100 and 600 revolutions per minute.

## Patentansprüche

1. Verfahren zur Herstellung durch Vermischen - Schmelzen - Extrudieren einer thermoplastischen Zusammensetzung auf Basis mindestens eines Polyvinylalkohols, die frei von nicht geschmolzenem Material und frei von einem physikalischchemischen Abbau des genannten Polyvinylalkohols ist, der sich in einer Gelbverfärbung manifestiert, wobei die Zusammensetzung außerdem mindestens ein Mittel zum Plastifizieren des genannten Polyvinylalkohols und gegebenenfalls weitere Agentien enthält, wobei das Verfahren die folgenden Aktionszonen umfasst, die bestehen aus:
- der Einführung des (der) kristallinen Polyvinylalkohols (Polyvinylalkohole) und des (der) Plastifizierungsmittels (Plastifizierungsmittel) in eine Beschickungszone, in der sie unter Rühren miteinander vermischt und auf eine Temperatur unterhalb der Schmelztemperatur der Mischung erhitzt werden;
- dem Schmelzen der warmen Mischung, die aus der Beschickungszone stammt, bei einer geeigneten Temperatur in einer Schmelzzone und unter Rühren der Mischung;
- dem Entgasen der aus der Schmelzzone stammenden geschmolzenen Mischung in einer Entgasungszone, um alle flüchtigen Verbindungen, die aus dem Schmelzen der Mischung resultieren, daraus zu eliminieren: und
- dem Komprimieren der geschmolzenen und entgasten Mischung in einer Kompressionszone und dem Extrudieren derselben bei einer geeigneten Temperatur,
wobei in dem Verfahren zwischen der Zone zum Einführen und Vermischen der Komponenten und der Zone zum Schmelzen der Mischung der Komponenten eine Zone zur vollständigen Absorption des Plastifizierungsmittels durch die Polyvinylalkohol-Kristalle bis in den Kern der genannten Kristalle geschaffen wird, wobei die Absorption unter der Einwirkung eines Mischers bzw. Kneters mit geringer Scherwirkung und bei einer niedrigen Temperatur durchgeführt wird, die so eingestellt wird, dass die Polyvinylalkohol-Kristalle, die in ihrem Kern das Plastifizierungsmittel absorbiert haben, nicht schmelzen.

2. Verfahren nach Anspruch 1, **dadurch gekennzeichnet, dass** die Zone zur vollständigen Absorption des Plastifizierungsmittels in dem Kern der Polyvinylalkohol-Kristalle eine Vormischzone ist, die von einem Mischer (Kneter) vom Extruder-Typ unabhängig ist, wobei das Schmelzen und die Extrusion der erhaltenen Mischung anschließend in einem Mischer (Kneter) vom Extruder-Typ durchgeführt werden.

3. Verfahren nach Anspruch 1, **dadurch gekennzeichnet, dass** die Aktionszonen des Verfahrens in ihrer Gesamtheit in einem Mischer (Kneter) vom Extruder-Typ ablaufen.

4. Verfahren nach Anspruch 3, **dadurch gekennzeichnet, dass** der Mischer (Kneter) vom Extruder-Typ unter diesen ihn aufbauenden Zonen fünf aufeinanderfolgende Haupt-Aktionszonen umfasst, die bestehen aus:
- einer ersten Hauptzone, einer so genannten Beschickungszone, zum Einführen der Polymer-Komponente durch einen Zuführungstrichter, in der die Polymer-Komponente dann gleichzeitig einem milden Durchmischen (Verkneten) unter Einwirkung einer geringen Scherkraft, einer mechanischen Mitnahme (Transport) durch die Achse des Mischers (Kneters) und einer Erwärmung auf eine in einer Beschickungszone klassische Temperatur unterworfen wird und gegebenenfalls die Gesamtmenge oder ein Teil des Plastifizierungsmittels in der genannten ersten Zone in den Polyvinylalkohol injiziert (eingespritzt) wird;
- einer zweiten Hauptzone, einer so genannten Absorptionszone, in der wenn eine Injektion in der ersten Zone nicht durchgeführt worden ist oder wenn sie nur zu einem Teil in der ersten Zone durchgeführt worden ist, in die warme, jedoch nicht geschmolzene Masse der Kristalle des Polymers das Plastifizierungsmittel oder der andere (restliche) Teil des Plastifizierungsmittels injiziert (eingespritzt wird) bei gleichzeitiger Fortsetzung der milden Durchmischungs-, mechanischen Mitnahme (Transport)-Arbeitsgänge der Mischung und der Aufrechterhaltung der Temperatur der Mischung, bis die warmen, jedoch nicht geschmolzenen Kristalle des Polyvinylalkohols die Gesamtheit des Plastifizierungsmittels absorbiert haben, wobei diese vollständige Absorption im Kern der genannten warmen und nicht geschmolzenen Kristalle erfolgt;
- einer dritten Hauptzone, um das vollständige und schnelle Schmelzen der Polyvinylalkohol-Kristalle, welche die Gesamtheit des Plastifizierungsmittels absorbiert haben, zu bewirken, indem man sie kurz auf eine Temperatur bringt, die innerhalb eines engen Bereiches oberhalb und unterhalb der Schmelztemperatur des genannten Polymers allein gehalten wird, damit das Schmelzen homogen und ohne Abbau erfolgt;
- einer vierten Hauptzone, um die Temperatur der geschmolzenen Mischung schnell auf einen Wert abzusenken, der etwas oberhalb des Schmelzpunktes der Polyvinylalkohol-Kristalle, die in ihrem Kern das Plastifizierungsmittel absorbiert haben, liegt, um die Gefahr des thermischen Abbaus zu beherrschen, und um die geschmolzene und abgekühlte Mischung zu entgasen, um daraus alle flüchtigen Verbindungen zu eliminieren; und
- einer fünften Hauptzone, um die geschmolzene und entgaste Mischung zu komprimieren unter Fortsetzung der Abkühlung, um jeglichen Abbau der geschmolzenen Mischung zu verhindern, sodass sie bei einer Temperatur gehalten wird, die stets etwas höher liegt als der Schmelzpunkt der Polyvinylalkohol-Kristalle, die in ihrem Kern das Plastifizierungsmittel absorbiert haben, und um die genannte geschmolzene und entgaste Mischung auf eine Viskosität einzustellen, die zu ihrer Extrusion erforderlich ist.

5. Verfahren nach Anspruch 1, **dadurch gekennzeichnet, dass** die Zone zur vollständigen Absorption des Plastifizierungsmittels im Kern der Polyvinylalkohol-Kristalle mit mechanischen Einrichtungen ausgestattet ist, welche das innige Vermischen der Komponenten und die Mitnahme (den Transport) der Mischung fördern, ohne dass ein Scherungsphänomen auftritt, das von großen thermischen Schocks und dem Abbau des Polyvinylalkohols herrührt.

6. Verfahren nach Anspruch 1, **dadurch gekennzeichnet, dass** die Zone zur vollständigen Absorption des Plastifizierungsmittels im Kern der Polyvinylalkohol-Kristalle mit Einrichtungen zum Erwärmen und zur thermischen Regulierung ausgestattet ist, sodass die Temperatur der Mischung, die aus dem Plastifizierungsmittel und dem Polyvinylalkohol besteht, um mindestens 10 °C und vorzugsweise um mindestens 20°C unterhalb der Schmelztemperatur der plastifizierten Polyvinylalkohol-Kristalle liegt.

7. Verfahren nach Anspruch 3, **dadurch gekennzeichnet, dass** die Absorptionszone in einem Mischer (Kneter) vom Extruder-Typ angeordnet ist und eine Länge hat, die 10 % bis 70 % der Gesamtlänge der Extruder-Schnecke beträgt.

8. Verfahren nach Anspruch 7, **dadurch gekennzeichnet, dass** der Beginn der Absorptionszone sich in einem Abstand von 8 % bis 25 % des stromaufwärts gelegenen Endes des Mischers vom Extruder-Typ, bezogen auf die Gesamtlänge der Schnecke, befindet.

9. Verfahren nach Anspruch 2 oder 3, **dadurch gekennzeichnet, dass** das Mittel zum Plastifizieren des Polyvinylalkohols in das Innere des Polyvinylalkohols eingeführt wird, nachdem der Alkohol auf eine Temperatur gebracht worden ist, die um mindestens 10 °C und vorzugsweise um mindestens 20 °C unterhalb der Schmelztemperatur der im Kern plastifizierten Polyvinylalkohol-Kristalle liegt.

10. Verfahren nach Anspruch 3, **dadurch gekennzeichnet, dass** das Mittel zum Plastifizieren des Polyvinylalkohols in den Polyvinylalkohol in einem Abstand von dem stromaufwärts gelegenen Ende des Extruders eingeführt wird, der zwischen 0 % und 33 % und vorzugsweise zwischen 8 % und 25 % beträgt, wobei der Prozentsatz bezogen ist auf die Länge der Schnecke,

11. Verfahren nach mindestens einem der Ansprüche 1 bis 10, **dadurch gekennzeichnet, dass** die eingesetzten Polyvinylalkohole ein Molekulargewicht haben, das zwischen 10 000 und 200 000 liegt.

12. Verfahren nach mindestens einem der Ansprüche 1 bis 11, **dadurch gekennzeichnet, dass** die eingesetzten Polyvinylalkohole einen Hydrolysegrad aufweisen, der zwischen 50 % und 100 % und vorzugsweise zwischen 73 % und 99,5 % liegt.

13. Verfahren nach mindestens einem der Ansprüche 1 bis 12, **dadurch gekennzeichnet, dass** das Plastifizierungsmittel ausgewählt wird aus der Gruppe, die besteht aus aliphatischen Polyolen und ihren Derivaten, insbesondere Ethylenglycol, Diethylenglycol, Triethylenglycol, und den Polyethylenglycolen mit einem niedrigen Molekulargewicht, den Polyoxyethylenglycolen, Trimethylenglycol, Propylenglycol, Neopentylglycol, den Propandiolen, den Butandiolen, den Pentandiolen, Propantriol, Trimethylolpropan, den Hexantriolen, Pentaerythrit, Sorbit und ihren Derivaten, die jeweils einzeln oder in Form einer Mischung verwendet werden.

14. Verfahren nach Anspruch 13, **dadurch gekennzeichnet, dass** die in die Zusammensetzung eingeführte Konzentration des Plastifizierungsmittels höchstens 90 Gew.-% beträgt, bezogen auf das Gewicht der Zusammensetzung.

15. Verfahren nach Anspruch 14, **dadurch gekennzeichnet, dass** die Konzentration des Plastifizierungsmittels zwischen 90 und 50 Gew.%, bezogen auf das Gewicht der Mischung, liegt, wenn die Zusammensetzung zur Herstellung eines Gels bestimmt ist.

16. Verfahren nach Anspruch 14, **dadurch gekennzeichnet, dass** die Konzentration des Plastifizierungsmittels zwischen 1 und höchstens 50 Gew.-% und vorzugsweise zwischen 15 und 45 Gew,%, bezogen auf das Gewicht der Mischung, liegt, wenn die Zusammensetzung für die Herstellung von Granulaten bestimmt ist.

17. Verfahren nach mindestens einem der Ansprüche 1 bis 16, **dadurch gekennzeichnet, dass** man ein Dispergiermittel einführt, das die Dispersion des Plastifizierungsmittels in dem Polyvinylalkohol fördert und ausgewählt wird aus der Gruppe, die besteht aus den Mono- oder Diestern von Glycerin und einer Fettsäure mit vorzugsweise 6 bis 18 Kohlenstoffatomen.

18. Verfahren nach Anspruch 17, **dadurch gekennzeichnet, dass** die Konzentration des Dispergiermittels zwischen 0,05 und 1 Gew.-Teil, vorzugsweise zwischen 0,1 und 0,5 Gew.-Teilen, liegt, bezogen auf das Gewicht der Mischung, die aus dem Polyvinylalkohol und dem Plastifizierungsmittel besteht.

19. Verfahren nach mindestens einem der Ansprüche 1 bis 18, **dadurch gekennzeichnet, dass** man in die Zusammensetzung auf Basis von Polyvinylalkohol andere (weitere) Agentien, die ausgewählt werden aus der Gruppe, die besteht aus thermischen oder photochemischen Stabilisierungsmitteln, Antioxidantien, Schmiermitteln, Antistatikmitteln, Flammschutz-Agentien, Färbemitteln, Aromen, Parfüms, in allgemein bekannten Mengen einführt.

20. Verfahren nach mindestens einem der Ansprüche 1 bis 19, **dadurch gekennzeichnet, dass** man in die Zusammensetzung auf Basis von Polyvinylalkohol mineralische pulverförmige Materialien, die ausgewählt werden aus mineralischen Salzen und/oder Oxiden, die einer Oberflächenbehandlung unterzogen worden sind oder nicht unterzogen worden sind, insbesondere Carbonate von Calcium, Magnesium, Zink, Dolomit, Kalk, Magnesiumoxid, Aluminiumtrihydroxid, Aluminiumoxid, Tone und andere Aluminosilicate, vorzugsweise Talk, Kaolin, Glimmer, Bentonit, Wollastonit, und synthetische pulverförmige mineralische Materialien, insbesondere Glaskugeln und Nanofüllstoffe einführt.

21. Verfahren nach mindestens einem der Ansprüche 1 bis 18, **dadurch gekennzeichnet, dass** man in die Zusammensetzung auf Basis von Polyvinylalkohol pulverförmige organische Materialien, die zu einer Gruppe gehören, die besteht aus biologisch abbaubaren natürlichen Polymeren, insbesondere Glucide, wie z.B. Polysaccharide und insbesondere Stärke, Cellulose in Form eines Pulvers und/oder in Form von Fasern, Ruß, Pulver von synthetischen Polymeren, insbesondere Pulver von wärmehärtbaren Polymeren, einführt.

22. Verfahren nach Anspruch 20 oder 21, **dadurch gekennzeichnet, dass** die pulverförmigen mineralischen oder organischen Materialien eine Teilchengröße haben, die zwischen 0,01 und 300 µm und vorzugsweise zwischen 0,1 und 100 µm und zwischen 100 und 200 nm für die größte Dimension der Nanofüllstoffe liegt.

23. Verfahren nach mindestens einem der Ansprüche 20 bis 22, **dadurch gekennzeichnet, dass** die pulverförmigen mineralischen oder organischen Materialien in die Zusammensetzung in einer Menge von 0,01 bis 70 Gew.-%, vorzugsweise von 5 bis 30 Gew.-%, bezogen auf das Gesamtgewicht der Zusammensetzung, eingeführt werden.

24. Verfahren nach Anspruch 4, **dadurch gekennzeichnet, dass** die Beschickungszone, die in einem Mischer vom Extruder-Typ enthalten ist, eine Länge hat, die 8 % bis 25 % und vorzugsweise 16 % bis 21 % der Gesamtlänge der Extruderschnecke beträgt.

25. Verfahren nach mindestens einem der Ansprüche 1 bis 24, **dadurch gekennzeichnet, dass** die Zone zum Schmelzen der Mischung aus Polyvinylalkohol-Kristallen, die in ihrem Kern den Weichmacher absorbiert haben, in dem Mischer vom Extruder-Typ eine Länge hat, die 10 % bis 25 % und vorzugsweise 15 % bis 21 % der Gesamtlänge der Schnecke beträgt.

26. Verfahren nach mindestens einem der Ansprüche 1 bis 25, **dadurch gekennzeichnet, dass** die Temperatur in der Schmelzzone des Mischers vom Extruder-Typ in einem Intervall von ± 30 °C und vorzugsweise von ± 15 °C liegt, dessen Zentrum die Schmelztemperatur des Polyvinylalkohols allein ist.

27. Verfahren nach mindestens einem der Ansprüche 1 bis 26, **dadurch gekennzeichnet, dass** die geschmolzene Mischung, die aus der Schmelzzone stammt, in eine Zone zur schnellen Abkühlung und Entgasung unter Vakuum überführt wird, in der die Temperatur der geschmolzenen Mischung auf eine Temperatur gesenkt wird, die stets unterhalb der Schmelztemperatur des Polyvinylalkohols allein liegt, und auf eine Temperatur gebracht wird, die um mindestens 3 °C und vorzugsweise um mindestens 5 °C oberhalb der Schmelztemperatur der in ihrem Kern plastifizierten Polyvinylalkohol-Kristalle liegt.

28. Verfahren nach Anspruch 27, **dadurch gekennzeichnet, dass** die Zone zum Abkühlen und Entgasen der geschmolzenen Mischung eine Länge hat, die 12 % bis 21 % der Gesamtlänge der Schnecke beträgt.

29. Verfahren nach mindestens einem der Ansprüche 4 bis 26, **dadurch gekennzeichnet, dass** das Vermischen, das Verkneten, die Absorption, das Schmelzen, das Abkühlen und das Extrudieren der Zusammensetzung in einer kontrollierten Stickstoffatmosphäre durchgeführt werden.

30. Verfahren nach Anspruch 4, **dadurch gekennzeichnet, dass** das Plastifizierungsmittel zum Teil in die Mischungs-Hauptzone und zum Rest in die Absorptions-Hauptzone eingeführt wird.

31. Verfahren nach mindestens einem der Ansprüche 4 bis 30, **dadurch gekennzeichnet, dass** die Rotationsgeschwindigkeit der Schnecken des Mischers vorzugsweise zwischen 100 und 600 UpM liegt.
